(19) Europäisches Patentamt / European Patent Office / Office européen des brevets

(11) EP 4 485 278 B1

(12) **EUROPEAN PATENT SPECIFICATION**

(45) Date of publication and mention of the grant of the patent:
**23.09.2026 Bulletin 2026/39**

(21) Application number: **24184300.2**

(22) Date of filing: **25.06.2024**

(51) International Patent Classification (IPC):
***G06N 3/048*** *(2023.01)* ***G06N 3/049*** *(2023.01)*
***G06N 3/084*** *(2023.01)* ***G06N 3/09*** *(2023.01)*
***G06N 3/065*** *(2023.01)*

(52) Cooperative Patent Classification (CPC):
**G06N 3/049; G06N 3/048; G06N 3/065; G06N 3/084; G06N 3/09**

(54) **COMPUTING APPARATUS BASED ON SPIKING NEURAL NETWORK AND OPERATING METHOD OF COMPUTING APPARATUS**

RECHNERVORRICHTUNG AUF DER BASIS EINES NEURONALEN SPIKING-NETZWERKS UND BETRIEBSVERFAHREN DER RECHNERVORRICHTUNG

APPAREIL INFORMATIQUE BASÉ SUR UN RÉSEAU NEURONAL IMPULSIONNEL ET PROCÉDÉ DE FONCTIONNEMENT D’APPAREIL INFORMATIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **29.06.2023 KR 20230084107**
**24.10.2023 KR 20230143294**

(43) Date of publication of application:
**01.01.2025 Bulletin 2025/01**

(73) Proprietors:
- **Samsung Electronics Co., Ltd.**
  **Suwon-si, Gyeonggi-do 16677 (KR)**
- **Seoul National University R&DB Foundation**
  **Seoul 08826 (KR)**

(72) Inventors:
- **Kim, Sangbum**
  **Seoul 08826 (KR)**
- **Lee, Sung Min**
  **Yongin-si, Gyeonggi-do 16875 (KR)**
- **Lee, Hoonroe**
  **Seoul 08208 (KR)**
- **Moon, Hyunin**
  **Seoul 08786 (KR)**

(74) Representative: **Grünecker Patent- und Rechtsanwälte**
**PartG mbB**
**Leopoldstraße 4**
**80802 München (DE)**

(56) References cited:
**US-B2- 9 792 547**

- **MELIKA PAYVAND ET AL: "On-Chip Error-triggered Learning of Multi-layer Memristive Spiking Neural Networks", ARXIV.ORG, CORNELL UNIVERSITY LIBRARY, 201 OLIN LIBRARY CORNELL UNIVERSITY ITHACA, NY 14853, 21 November 2020 (2020-11-21), XP081820170**
- **BOHNSTINGL THOMAS ET AL: "Biologically-inspired training of spiking recurrent neural networks with neuromorphic hardware", 2022 IEEE 4TH INTERNATIONAL CONFERENCE ON ARTIFICIAL INTELLIGENCE CIRCUITS AND SYSTEMS (AICAS), IEEE, 13 June 2022 (2022-06-13), pages 218 - 221, XP034180261, DOI: 10.1109/AICAS54282.2022.9869963**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 485 278 B1

## Description

BACKGROUND

### 1. Field

Methods and apparatuses consistent with embodiments relate to a computing device based on a spiking neural network (SNN) and an operating method of the computing device.

### 2. Description of the Related Art

A spiking neural network (SNN) is a type of neural network in which neurons of a neural network model communicate through sequences of spikes. In the SNN, a spike (e.g., a brief electrical pulse or signal serving a unit of information) may be emitted from a neuron when the neuron reaches a certain threshold, and then propagated through a network including neurons and synapses. The SNN may exchange discrete information indicating whether a spike occurs in a specific neuron at a specific time, unlike a deep learning network such as a multilayer perceptron (MLP), a recurrent neural network (RNN), and a convolutional neural network (CNN) that exchanges tensors or floats.
The publication of MELIKA PAYVAND ET AL: "On-Chip Error-triggered Learning of Multi-layer Memristive Spiking Neural Networks", ARXIV.ORG, CORNELL UNIVERSITY LIBRARY, 201 OLIN LIBRARY CORNELL UNIVERSITY ITHACA, NY 14853, 21 November 2020 (2020-11-21), refers to on-chip error-triggered learning of multi-layer memristive spiking neural networks. A local, gradient-based, error-triggered learning algorithm is proposes with online ternary weight updates. The algorithm enables online training of multi-layer SNNs with memristive neuromorphic hardware showing a small loss in the performance compared with the state-of-the-art. A hardware architecture is proposed based on memristive crossbar arrays to perform the required vector-matrix multiplications.
The publication of BOHNSTINGL THOMAS ET AL: "Biologically-inspired training of spiking recurrent neural networks with neuromorphic hardware", 2022 IEEE 4TH INTERNATIONAL CONFERENCE ON ARTIFICIAL INTELLIGENCE CIRCUITS AND SYSTEMS (AICAS), IEEE, 13 June 2022 (2022-06-13), pages 218-221 refers to biologically-inspired training of spiking recurrent neural networks with neuromorphic hardware. A biologically-inspired local and online training algorithm is proposed that is compatible with IMC, which approximates BPTT. SNN weights have been embedded on an in-memory computing NMHW with phase-change memory (PCM) devices and integrated into a hardware-in-the-loop training setup. This approach has been developed with respect to limited precision and imperfections of the analog devices using a PCM-based simulation framework and a NMHW consisting of in-memory computing cores fabricated in I4nm CMOS technology with 256x256 PCM crossbar arrays and demonstrated robustness.
US 9,792,547 B2 refers to neural network circuit and learning method for neural network circuit. The neural network circuit includes an error calculating circuit that generates an error voltage signal having a magnitude in accordance with a time difference between an output signal and a teaching signal corresponding to the output signal. A weight change pulse voltage signal is input to a synapse circuit of a neural network circuit element including a neuron circuit that output the weight change pulse voltage signal, and a switching pulse voltage signal is input to a synapse circuit of a neural network circuit element other than the neural network circuit element including the neuron circuit that output the switching pulse voltage signal. The neural network circuit element changes the amplitude of the weight change pulse voltage signal on the basis of tire error voltage signal generated by the error calculating circuit.

SUMMARY

The invention is what is claimed in the independent claims. Preferred embodiments are specified in the dependent claims.

According to an aspect of various example embodiments, there is provided a computing device according to claim 1.

The SNN may include at least one of: a plurality of synaptic cells configured to store weight values in the form of a crossbar array (CBA); a neuron circuit that is based on a current-based leaky integrate-and-fire (LIF) neuron model in which an activity of a pre-synaptic neuron among the spiking neurons is reflected; or a loss-2-pulse circuit configured to receive the loss value calculated by the loss circuit module, generate a pulse corresponding to the loss value, and transmit the pulse to the neuron circuit.

The loss circuit module may be configured to normalize the accumulated potential value and backpropagate, to the SNN, the loss value that is based on a difference between the normalized potential value and a label vector.

The loss circuit module may include: a spike counter circuit configured to accumulate the potential value by the output spike signal; a normalization circuit configured to normalize the accumulated potential value; and a loss circuit configured to calculate the loss value based on the difference between the normalized potential value and the label vector.

The computing device may be configured to, during the backpropagation, replace an activation function of the spiking neurons with an extended boxcar function in which a window controlling a membrane potential range through which gradients pass is extended.

The computing device may be configured to backpropagate, to all the spiking neurons, a loss value of a last layer of the SNN, regardless of whether the spiking neurons fire during the forward propagation of the loss value.

The computing device may be configured to, during the backpropagation of the loss value, propagate the loss value to all elements of a kernel at the same time.

The computing device may further include: an eligible potential generation circuit configured to receive the pulse, calculate an eligible potential value corresponding to the pulse, and transmit the calculated eligible potential value as the output spike signal to the SNN.

The eligible potential generation circuit may be configured to calculate the eligible potential value by applying a clamp function to a result of adding a membrane potential value of a spike of a previous time step and a scaled spike value of a current time step.

The eligible potential generation circuit may be configured to calculate an eligible spike by applying a Heaviside function to a difference between the eligible potential value and a threshold value of the eligible spike.

The SNN is further configured to compute a weighted sum of the output spike signal that is output from the eligible potential generation circuit using a weight stored in a synaptic cell of the SNN, and store the weighted sum in a neuron circuit of the SNN.

The eligible potential generation circuit may include at least one of: an eligible potential circuit configured to calculate the eligible potential value according to time corresponding to the pulse to be in a leaky-integration (LI) form by a resistor-capacitor (RC) circuit; a threshold comparator configured to compare the eligible potential value to a threshold value of an eligible spike; or a flag generator configured to store a flag value corresponding to the eligible spike based on a comparison between the eligible spike and the threshold value.

The SNN may include a CBA, and the flag value may be applied as a pulse that selects a synaptic cell from rows of the CBA.

The threshold comparator may include: an operational amplifier (OP-AMP) circuit or a bi-stable circuit with a series of NOT gates.

The loss circuit module may be configured to: in response to a backpropagation (BP) signal being input, calculate the loss value and backpropagate the loss value to the SNN; and in response to a reset signal, reset the accumulated potential value stored in a spike counter circuit of the loss circuit module.

According to another aspect of various example embodiments, there is provided a training method according to claim 11.

The calculating of the loss value through the forward propagation may include: for each of all the time steps, receiving an output spike signal that is output from the pre-synaptic neuron of a previous layer; transmitting, to the membrane potential, a value obtained by a weighted sum of the potential value accumulated by the output spike signal and a weight corresponding to a current layer; outputting a loss value corresponding to the current layer based on a difference between the potential value transmitted to the membrane potential and a membrane potential threshold value; calculating an eligible spike value by scaling the output spike signal based on a clamp function and performing binarization; and storing, in a memory, the eligible spike value as an eligible potential value for each of the time steps.

The training of the SNN may include: comparing the eligible potential value stored in the memory to a threshold value of an eligible spike; and in response to the eligible potential value being greater than or equal to the threshold value of the eligible spike, generating the eligible spike and updating a weight for the SNN to train the SNN.

BRIEF DESCRIPTION OF THE DRAWINGS

The above and/or other aspects will be more apparent by describing certain example embodiments, taken in conjunction with the accompanying drawings, in which:

FIG. 1 is a diagram illustrating a hardware implementation of a spiking neural network (SNN) according to an embodiment;

FIGS. 2A and 2B are diagrams illustrating an operating method of an SNN according to an embodiment;

FIG. 3 is a roll-up diagram illustrating a surrogate online learning at once (hereinafter "SOLO") algorithm used to train an SNN according to an embodiment;

FIG. 4 is a graph illustrating an extended boxcar function used as a kernel function in an SNN according to an example embodiment;

FIG. 5 is a diagram illustrating an operation of a spike counter of an SNN according to an example embodiment;

FIG. 6 is a diagram illustrating an always-on pooling operation according to an example embodiment;

FIG. 7 is a diagram illustrating an operation of an eligible potential generation circuit according to an example

embodiment;
FIG. 8 is a diagram illustrating an eligible trace by an eligible potential generation circuit according to an example embodiment;
FIG. 9 is a diagram illustrating an example of a crossbar array (CBA) circuit in which an eligible potential generation circuit is implemented according to an example embodiment;
FIG. 10 is a block diagram illustrating an eligible potential generation circuit according to an example embodiment;
FIG. 11 is a diagram illustrating an example of a threshold comparator for an eligible spike according to an example embodiment;
FIG. 12 is a diagram illustrating a structure and operations of a loss circuit module of an SNN according to an example embodiment;
FIG. 13 is a diagram illustrating a method of performing backpropagation in a specific time step of a SOLO used to train an SNN according to an example embodiment;
FIG. 14 is a diagram illustrating a method of performing backpropagation in a specific time step of a SOLO by receiving a signal from a specific module of an SNN according to an example embodiment;
FIG. 15 is a diagram illustrating an example of a CBA system in which an SNN is implemented according to an example embodiment; and
FIG. 16 is a flowchart illustrating a training method performed by a computing device to train an SNN according to an embodiment.

## DETAILED DESCRIPTION

Although terms of "first" or "second" are used to explain various components, the components are not limited to the terms. These terms should be used only to distinguish one component from another component. For example, a "first" component may be referred to as a "second" component, or similarly, and the "second" component may be referred to as the "first" component within the scope of the right according to the concept of the present disclosure.

It will be understood that when a component is referred to as being "connected to" another component, the component can be directly connected or coupled to the other component or intervening components may be present.

As used herein, the singular forms are intended to include the plural forms as well, unless the context clearly indicates otherwise. It should be further understood that the terms "comprises," "comprising," "includes," and/or "including," when used in this specification, specify the presence of stated features, integers, steps, operations, elements, components or a combination thereof, but do not preclude the presence or addition of one or more other features, integers, steps, operations, elements, components, and/or groups thereof.

Unless otherwise defined herein, all terms used herein including technical or scientific terms have the same meanings as those generally understood by one of ordinary skill in the art. Terms defined in dictionaries generally used should be construed to have meanings matching with contextual meanings in the related art and are not to be construed as an ideal or excessively formal meaning unless otherwise defined herein.

Hereinafter, example embodiments will be described in detail with reference to the accompanying drawings. When describing the example embodiments with reference to the accompanying drawings, like reference numerals refer to like components and a repeated description related thereto is omitted.

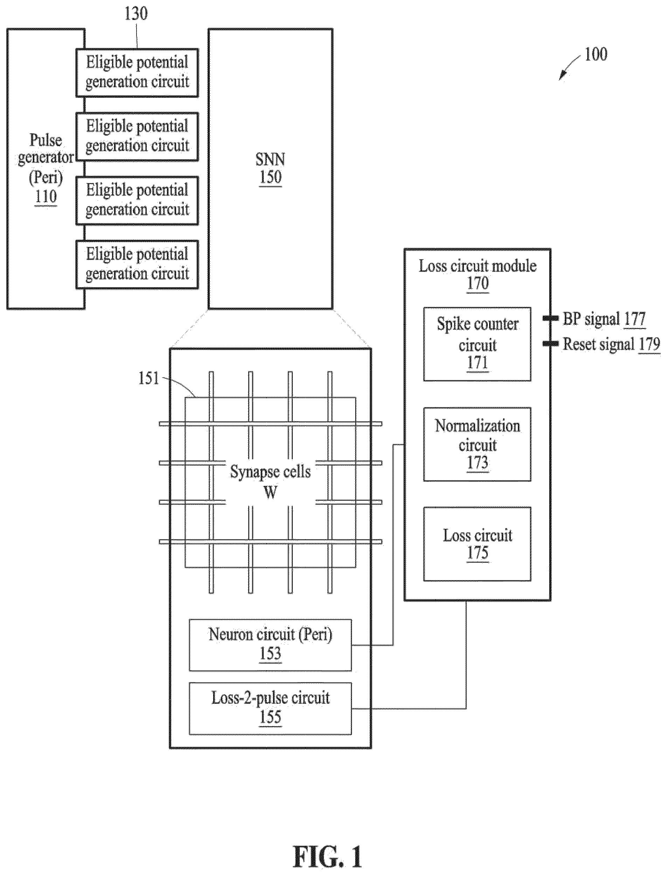

FIG. 1 is a diagram illustrating a hardware implementation of a spiking neural network (SNN) according to an embodiment. Referring to FIG. 1, a computing device 100 may include a pulse generator 110, eligible potential generation circuits 130, an SNN 150, and a loss circuit module 170. The computing device 100 may be also refer to as a machine learning accelerator, a neural network accelerator, or a neuromorphic processor.

The pulse generator 110 generates a pulse corresponding to an input spike signal. The pulse generator 110 may provide the generated pulse to the eligible potential generation circuits 130 and the SNN 150.

The eligible potential generation circuits 130 may receive the pulse from the pulse generator 110, calculate an eligible potential value corresponding to the pulse, and transmit an output spike signal including the calculated eligible potential value to the SNN 150.

The eligible potential generation circuits 130 may represent an activity of a pre-synaptic neuron of the SNN 150 and may apply an eligible trace to a weight update rule. The eligible potential generation circuits 130 may be replaced, and applied as, with gradient operation elements of a chain rule on a crossbar array (CBA) in the form of a binary local temporal memory. The number of eligible potential generation circuits 130 may correspond to the number of rows of synaptic cells 151 of the SNN 150 through a one-to-one correspondence.

As will be described in more detail below with reference to Equation 6, the eligible potential generation circuits 130 may calculate the eligible potential value by applying a clamp function to a result of adding a membrane potential value of a spike of a previous time step and a scaled spike value of a current time step. The eligible potential generation circuits 130 may also calculate an eligible spike by applying a Heaviside function to a difference between the eligible potential value and a threshold value of the eligible spike.

Output spikes generated from the eligible potential generation circuits 130 may be added through a multiplication operation with weights stored in the synaptic cells 151 of the SNN 150. A result of the adding may be stored in a neuron circuit 153 of the SNN 150.

During forward propagation, an input of the CBA of the SNN 150 and an input of the eligible potential generation circuits 130 may be calculated (or computed) in parallel and may be distinguished from each other. At the same time, each of the eligible potential generation circuits 130 may receive a pulse corresponding to a spike from the pulse generator 110.

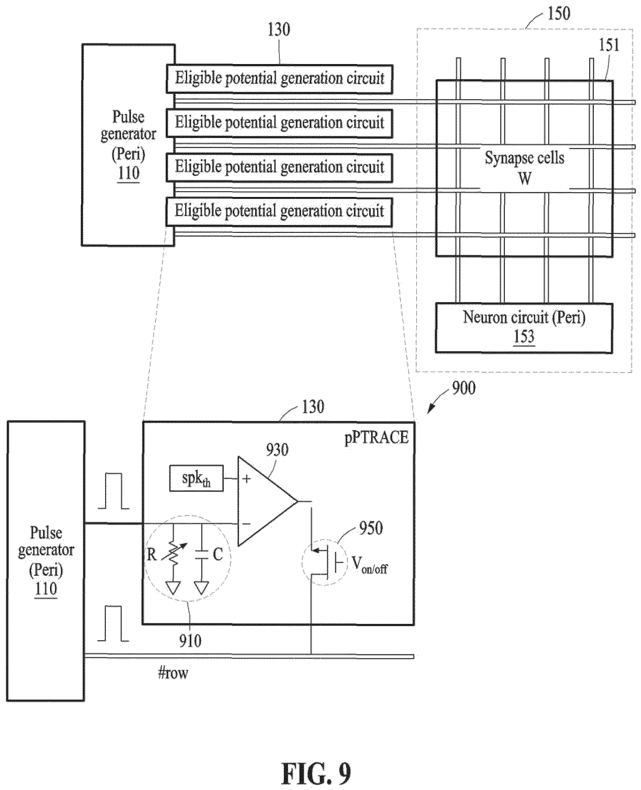

In addition, during the forward propagation, each of the eligible potential generation circuits 130 may calculate an eligible potential value. The eligible potential generation circuits 130 may each be configured as, for example, a resistor-capacitor (RC) circuit including a resistor R and a capacitor C that are connected in parallel. In the RC circuit, the resistor R may be implemented as a variable resistor, and a resistance (or variable resistance) may be learned according to a gradient of the chain rule. In this case, the "chain rule" may correspond to a formula that expresses the constituent derivatives of two differentiable functions f and g as derivatives of f and g. The eligible potential generation circuits 130 may each correspond to, for example, a pseudo-parametric spike trace (hereinafter referred to as "pPTRACE"), which will be described below with reference to FIG. 9. The structure and operations of the eligible potential generation circuits 130 will be described in more detail below with reference to FIG. 9.

The SNN 150 includes layers of spiking neurons that generate output spike signals by applying the pulse generated by the pulse generator 110 to a neuron model. The "spiking neuron(s)" may constitute the SNN 150, and a spiking neuron may refer to a neuron that fires a spike when a potential of the neuron exceeds a membrane potential threshold value. The spiking neuron may generate an electrical pulse that is referred to as an action potential or spike. The spiking neuron may process information from multiple inputs to generate a single output spike signal.

The SNN 150 may perform energy-efficient calculations (or computation) and replicate cognitive functions similar to those performed by the human brain. In the SNN 150, spiking neurons may transmit information using binary or sparse spikes, enabling an intuitive hardware design and event-based computing. However, in the existing art, there may be a lack of efficient training methods for deep SNNs (e.g., the SNN 150) that have online learning rules that mimic biological systems for distribution to a neuromorphic computing substrate.

In an example embodiment, a surrogate online learning at once (hereinafter, referred to as "SOLO") algorithm may be performed for the SNN 150 using some surrogate strategies that may be implemented in a hardware-friendly manner.

As will be described in more detail below, backpropagation, which is a learning method of an artificial neural network (ANN), may be applied to train the SNN 150. For example, a gradient-based direct learning method using a surrogate gradient (SG) may be used to train the SNN 150 of high performance with large datasets with an extremely short latency. However, in the SNN 150, there may be a difficulty due to memory requirements expanding according to the number of time steps that increases during learning (or training) due to a credit assignment problem that may arise from representing each rapidly growing neuron as its own recurrent neural network (RNN). Moreover, the gradient-based direct learning method using an SG may deviate from the principles of biological online learning, which serves as the learning rule in the neuromorphic substrate, and may thus be inefficient in actual tasks in terms of memory and time complexity despite its compatibility with event-based inputs and various spiking neuron models.

The computing device 100 may have an embedded neuromorphic substrate that may be implemented in consideration of an influence on a neuromorphic computing (NC) chip to achieve expandable online on-chip learning for the SNN 150. The computing device 100 may use an online on-chip learning algorithm that is designed jointly with the neuromorphic substrate to reproduce complex biological functions with leakage characteristics at low power consumption, and may thereby implement the SNN 150 of high performance with low latency and maintain online learning characteristics.

In an example embodiment, the SOLO algorithm for the SNN 150, which uses four surrogate strategies, may be used to perform learning with low computational complexity using a gradient of ae final time step. The SOLO algorithm may be designed to be hardware-friendly and may perform efficient on-chip learning using local information. The SOLO algorithm may address non-idealities in an analog computing substrate including device mismatch and thermal noise and an issue of device endurance associated with a lack of write access.

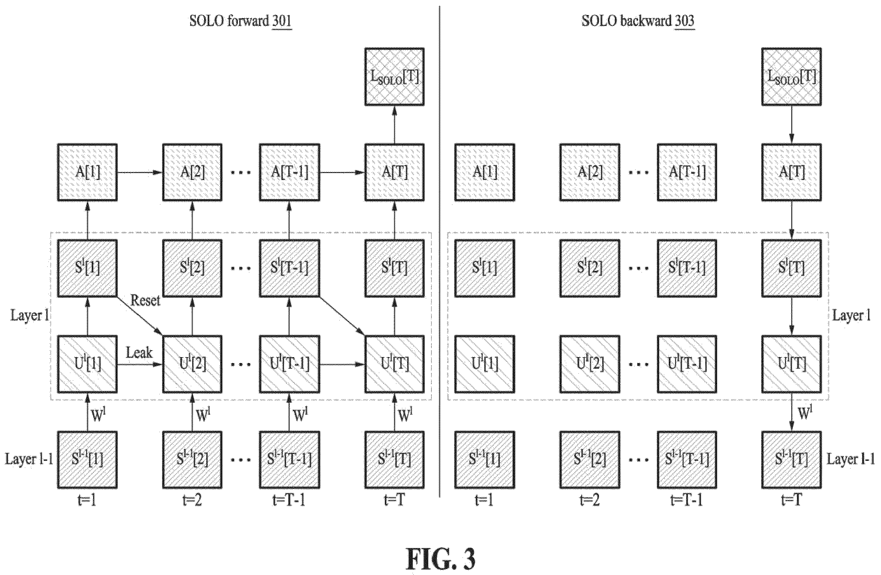

As will be described in more detail below with reference to FIG. 3, the computing device 100 may backpropagate spatial information (e.g., a special gradient or a spatial loss) of a last time step without reflecting a temporal loss and a spatial-temporal loss of the SNN 150. Therefore, the computing device 100 may have a small memory and time complexity and may reflect a gradient for a weight in real time. In this case, the computing device 100 may reflect temporal information to the maximum through a local memory of the SNN 150. The computing device 100 may replace the temporal information and reflect spatial information in the SNN 150, based on a spatial weight update rule of a surrogate gradient learning (SGL) method. In this case, the SGL method may enable backpropagation learning by using surrogate gradients in a non-differentiable activation function of neurons in a known SNN system, and may replace a non-differentiable part with a surrogate gradient value during the learning process.

In the SGL method, all gradients may be divided into a temporal gradient, a spatial gradient, and a spatial-

temporal gradient. The temporal gradient may occur along a time axis between a current membrane potential and a previous membrane potential. The temporal gradient may pertain to the change or variation in parameters of the SNN 150 over time, and may involve adjustments made to parameters based on the progression of time during the learning process. The spatial gradient pertains to the change or variation in the network parameters concerning spatial dimensions, and may involve the adjustment of the network parameters based on the spatial arrangement of neurons within the SNN 150. The spatial-temporal gradient may occur along the time axis between a current membrane potential and a previous spike occurrence. The spatial-temporal gradient may correspond to, for example, a gradient that flows horizontally and diagonally in a roll-up diagram of FIG. 3. Unlike the temporal gradient and the spatial-temporal gradient, the spatial gradient may occur by a spatial relationship independently of the time axis. The spatial gradient may correspond to a gradient that flows vertically in the roll-up diagram.

In the SGL method, weights may always be present between a previous layer and a current layer of the SNN 150. Instead of having distinct or separate spatial weights, the above-described three types of gradients may be applied, and the weights may be updated based on a gradient selected from among the three types of gradients. The eligible trace described above may correspond to a method of replacing a temporal gradient with a type of spatial gradient.

The SOLO algorithm may correspond to a learning method that replaces temporal information with spatial information.

The computing device 100 may include, as hardware components, four surrogate strategies to be described in detail below. The four surrogate strategies used in the SOLO algorithm for the SNN 150 will be described in more detail below with reference to FIGS. 3 to 11.

The SNN 150 may include, for example, the synaptic cells 151, the neuron circuit 153, and a loss-2-pulse circuit 155.

The synaptic cells 151 may be in the form of a CBA that may store a weight value for each synaptic cell.

The neuron circuit 153 may be based on a current-based leaky integrate-and-fire (LIF) neuron model that reflects therein an activity of a pre-synaptic neuron among the spiking neurons. The neuron circuit 153 may include a pseudo-parametric LIF (pPLIF) spiking neuron model and learnable time constant parameters that are referred to as pseudo-parametric leaky integration (pPLI) neurons, which will be described below.

The loss-2-pulse circuit 155 may receive the loss value calculated by the loss circuit module 170, generate a pulse corresponding to the loss value, and transmit the pulse to the neuron circuit 153.

The loss circuit module 170 calculates a loss value based on an accumulated potential value by an output spike signal generated for each layer of the SNN 150 and backpropagates the loss value to the SNN 150.

The SNN 150 calculates a loss value for all the time steps during forward propagation. A time step may refer to a specific iteration in the unfolding of the recurrent connections of the SNN 150 over a sequence of input data. In the forward pass at each time step, the SNN 150 may process input data and compute activations at a specific layer of the SNN 150. For example, in the case where the SNN 150 includes n layers, the processing of input data and the computation of activations may take place over n time steps, with each layer processed at each respective time step. The loss circuit module 170 backpropagates a loss value of a last time step of the forward propagation of the loss value.

The loss circuit module 170 may normalize a potential value accumulated in a spike counter circuit 171. The loss circuit module 170 may backpropagate to the SNN 150, a loss value that is calculated based on a difference between the normalized potential value and a label vector.

The loss circuit module 170 may include, for example, the spike counter circuit 171, a normalization circuit 173, and a loss circuit 175. To the loss circuit module 170, a backpropagation signal 177 (or "BP signal") and a reset signal 179 (or "Reset signal") may be applied.

The spike counter circuit 171 may accumulate potential values by the output spike signal. The spike counter circuit 171 may correspond to accumulative neurons to be described below.

The loss circuit module 170 may transmit the accumulated potential value to the spike counter circuit 171 for all the time steps to the normalization circuit 173.

The normalization circuit 173 may normalize a potential transmitted from the spike counter circuit 171 by applying an activation function such as, for example, a softmax function or a scaling function. That is, the normalization circuit 173 may output a probability of a class corresponding to the potential transmitted from the spike counter circuit 171.

The loss circuit 175 may calculate the loss value based on the difference between the potential value normalized by the normalization circuit 173 and the previously stored label vector. The loss circuit 175 may calculate the loss value corresponding to the probability of the class output from the normalization circuit 173. The loss value generated in the loss circuit module 170 may be transmitted back to the loss-2-pulse circuit 155 of the SNN 150. The loss-2-pulse circuit 155 may generate a pulse corresponding to the transmitted loss and transmit the pulse to the neuron circuit 153. The neuron circuit 153 may apply a learning rate value to the loss value and apply it to the weight update rule.

The loss circuit module 170 may not operate for all time steps but may operate in a specific time step by receiving a specific signal.

The BP signal 177 may correspond to a signal that allows the loss circuit module 170 to be driven to derive a loss

value and perform backpropagation.

The reset signal 179 may correspond to a signal that resets the accumulated potential values stored in the accumulative neurons, i.e., the spike counter circuit 171.

After the loss circuit module 170 is operated according to the BP signal 177, the reset signal 179 may be transmitted, but examples are not necessarily limited thereto. The BP signal 177 and the reset signal 179 may operate independently of each other. The BP signal 177 and the reset signal 179 may operate mainly on static data.

In an example embodiment, the SOLO algorithm may be implemented based on a LIF neuron model that is converted into an iterative expression using the Euler method. In this case, a parametric LIF (PLIF) neuron may be used to improve SNN performance by introducing a learnable membrane potential time constant $\tau$.

In addition, in an example embodiment, a pPLIF spiking neuron model may be used to learn a membrane potential time constant of the SNN 150. Compared to a PLIF neuron model, the pPLIF spiking neuron model may facilitate further hardware porting and may simplify the calculation of gradients flowing to the learnable membrane potential time constant $\tau$. The membrane potential time constant $\tau$ may be shared within spiking neurons in the same layer of the SNN 150.

In an example embodiment, a simple current model corresponding to the pPLIF spiking neuron model may be expressed as Equation 1 below.

[Equation 1]

$$I_i^l[t] = \sum W_{ij}^l S_j^{l-1}[t]$$

In Equation 1, a subscript "i" denotes an i-th neuron, $W_{ij}^l$ denotes a weight without a bias from a neuron j to a neuron i in a layer l. $S_j^{l-1}$ indicates whether an output spike occurs (or exists) at a neuron j of a layer l - 1. In the presence of the output spike at the neuron j of the layer l - 1, $S_j^{l-1}$ is 1 (i.e., $S_j^{l-1} = 1$), but in the absence of the output spike, $S_j^{l-1}$ is zero (i.e., $S_j^{l-1} = 0$).

In this case, a discrete computational form of the current model of Equation 1 may be expressed as Equation 2 below.

[0087] [Equation 2]

$$\begin{cases} U_i^l[t] = \beta^l U_i^l[t-1](1 - S_i^l[t-1]) + I_i^l[t] \\ S_i^l[t] = \Theta(U_i^l[t] - \vartheta_{\text{th}}) \end{cases}$$

In Equation 2, $U_i^l$ denotes a subthreshold membrane potential of the neuron i in the layer l of the SNN 150. A threshold used herein may correspond to a membrane potential threshold value. $\beta^l = 1/(1+exp(-\tau_{mem}^l))$ denotes a membrane potential decaying constant of the layer l.

$\tau_{mem}^{l}$ denotes a membrane potential time constant of the layer l. $S_i^l$ denotes an occurrence of an output spike of the neuron i in the layer l. $\Theta(\cdot)$ denotes a Heaviside function. The Heaviside function may also be referred to as a "unit step function," and may output zero (0) for real numbers less than 0, output 1 for real numbers greater than 0, and output 0.5 for 0. $\vartheta_{th}$ denotes a membrane potential threshold value. A reset operation may be implemented by multiplying the occurrence of the output spike of the neuron i in a time step t - 1.

Before calculating a loss using a spike counting method, the computing device 100 may update the output spikes counted by the spike counter circuit 171 into a spike accumulator. The spike accumulator may correspond to a module that performs an accumulation operation on an output spike signal of the SNN 150. An accumulated value of the spike accumulator may be applied to a mean squared error (MSE) loss operator after the last layer of the SNN 150. The spike accumulator may be positioned before the MSE loss operator.

The SNN 150 may include accumulative neurons that may operate in both an integrate mode (or I mode) that is the same as the spike accumulator, and a pseudo-parametric leaky integration (pPLI) neuron model using a learnable membrane potential time constant. The accumulative neurons may count spikes through an operation of the pPLI neuron model.

The operation of the accumulative neurons may be similar to that of the pPLI neuron model, and the pPLI neuron model may be similar to the pPLIF neuron model without firing.

The operation of the accumulative neurons may be expressed as Equation 3 below.

[Equation 3]

$$A_i[t] = \beta^A A_i[t-1] + S_i^L[t]$$

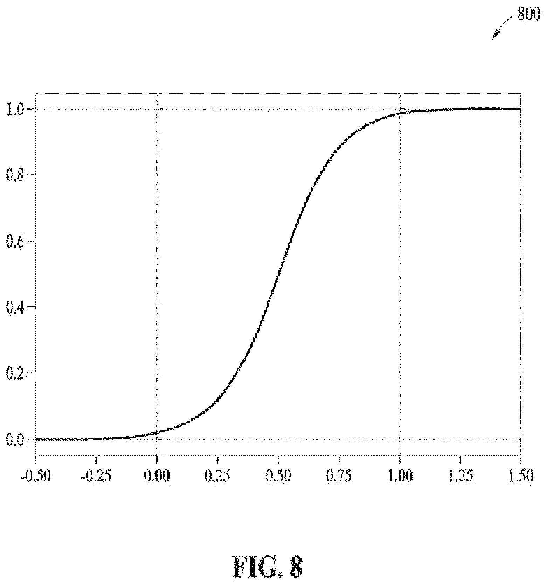

In Equation 3, $A_i$ denotes a membrane potential of an accumulative neuron i. $\beta^A = exp(-1/\tau_{mem}^{A})$ denotes a membrane potential decaying constant of the accumulative neuron i, in which $\beta^A$ denotes a leaky property of a membrane. $\beta^A$ may also correspond to sigmoid used as a clamp function to be described below with reference to FIG. 8. $S_i^L$ denotes an occurrence of an output spike of the neuron i in a last layer L of the SNN 150, in which L denotes the number of layers.

The computing device 100 may use extended spatial gradients in the last time step of forward propagation, corresponding to the last layer L of the SNN 150, such that the SOLO algorithm achieves low computational complexity while maintaining a similar convergence rate.

In addition, the SOLO algorithm update rule may be in the form of three-step Hebbian learning that enables online on-chip learning. In addition, the SOLO algorithm is hardware-friendly and may thus provide robustness against sparse write access to a memory device and against device non-idealities.

The SOLO algorithm may operate on other spiking circuits in addition to the computing device 100 according to an example embodiment.

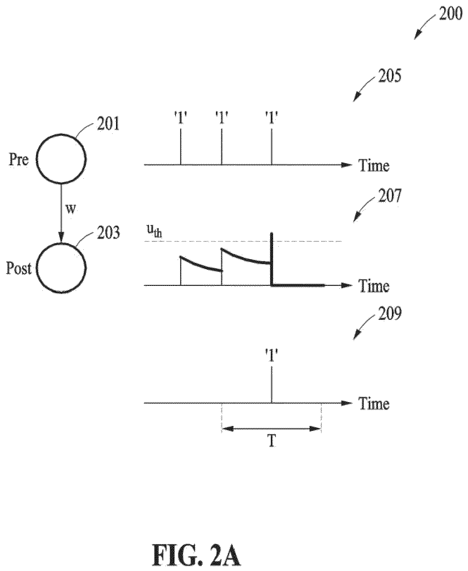

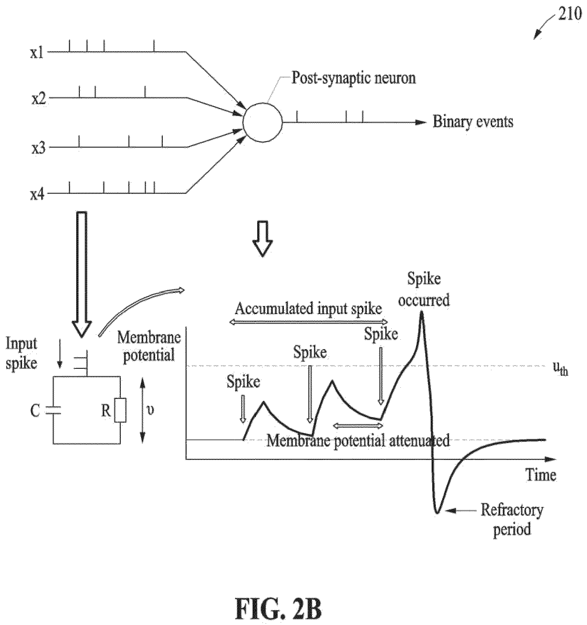

Hereinafter, before the SOLO algorithm for the SNN 150 using the four surrogate strategies, an information processing method of the SNN 150 will be described first with reference to FIGS. 2A and 2B.

FIGS. 2A and 2B are diagrams illustrating an operating method of an SNN according to an example embodiment. Referring to FIG. 2A, diagram 200 shows an information processing method performed in a case in which two spiking neurons, for example, a pre-synaptic neuron 201 and a post-synaptic neuron 203, are connected. In FIG. 2A, the symbol "T" denotes a single time step among all time steps.

When the pre-synaptic neuron 201 and the post-synaptic neuron 203 are connected as shown in FIG. 2A, the pre-synaptic neuron 201 may transmit information to the post-synaptic neuron 203. In this case, graph 205 may represent three spike signals sequentially transmitted from the pre-synaptic neuron 201 to the post-synaptic neuron 203 along a time axis. In addition, graph 207 may represent an action potential of the post-synaptic neuron 203 over time. It may be verified from the graph 207 that the action potential of the post-synaptic neuron 203 soars by a specific value each time it receives spike signals (e.g., a first spike signal and a second spike signal) from the pre-synaptic neuron 201 and is gradually attenuated by leakage over time. In this case, when the third spike signal is transmitted to the post-synaptic neuron 203 and the action potential exceeds a threshold $u_{th}$ shown in the graph 207, an output spike signal "1" may occur in the post-synaptic neuron

203 as shown in graph 209. Simultaneously with the occurrence of the output spike signal, a value of the action potential of the post-synaptic neuron 203 may be initialized to "0" as shown in the graph 207. The operation described in the foregoing may be similarly applied even when multiple neurons are connected.

Referring to FIG. 2B, diagram 210 shows an operation of a LIF neuron model.

An SNN may involve a concept of time in an interaction between neuron(s) and neurons called spikes. In the SNN, an internal state of a neuron may be changed by temporal information and a spike signal transmitted from another neuron, and a spike may occur when the changed internal state of the neuron satisfies a specific condition.

A neural cell body of a neuron may have inner and outer sides separated by a cell membrane, forming a membrane potential. The cell membrane may be modeled as a LIF neuron model shown in FIG. 2B.

The LIF neuron model may model the following rules of a neuron.

i) The LIF neuron model may put together spikes of pre-synaptic neurons. In this case, the spikes of the pre-synaptic neurons may be considered power coming from the outside and may correspond to a power source of the neuron.
ii) The LIF neuron model may generate a spike when a membrane potential exceeds a threshold voltage and may be initialized with a reset voltage. The neuron may store sodium ions in the neuron through an action potential transmitted to a pre-synaptic neuron. Such a characteristic may be modeled as a capacitor C that temporarily stores power. In addition, the membrane potential may have a voltage that is increased by the action potential and returns to the reset voltage over time as ions escape through the (cell) membrane. Such an operation may be modeled as a resistor R. Based on the foregoing, the LIF neuron model may be implemented as an RC circuit. The cell membrane may be represented as the capacitor C of the RC circuit, and a potential difference between both ends of a storage battery may be expressed as the membrane potential. When an external current I is input to the RC circuit, the capacitor C corresponding to the storage battery may be charged.
Referring to FIG. 2B, when the post-synaptic neuron receives input spike signals x1, x2, x3, and x4 from a pre-synaptic neuron, and as the input spike signals x1, x2, x3, and x4 are accumulated in the post-synaptic neuron, the action potential (or the membrane potential) of the post-synaptic neuron exceeds the threshold $u_{th}$, and the post-synaptic neuron may fire the action potential as an output spike. The membrane potential may accumulate with the presence of the input spike signals x1, x2, x3, and x4. Once the membrane potential exceeds the threshold $u_{th}$, the neuron fires an action potential, and the membrane potential goes back to the reset voltage. The post-synaptic neuron may return back to the reset voltage after a refractory period has passed since the generation of the output spike. The "refractory period" may correspond to a period in which an initialized state immediately after spike generation is briefly maintained.
iii) In the LIF neuron model, a membrane potential voltage may continuously leak.

FIG. 3 is a roll-up diagram illustrating a SOLO algorithm used to train an SNN according to an example embodiment.

Referring to FIG. 3, a roll-up diagram 301 shows operations of forward propagation performed in an SNN, and roll-up diagram 303 shows operations of backpropagation performed in the SNN.

A backpropagation through time (hereinafter, "BPTT") method may be applied in a backpropagation path of training an SNN, and may reflect a spatial loss, a temporal loss, and a spatial-temporal loss according to a chain rule. When a weight update rule is decomposed by the chain rule, it may be divided into the temporal loss, the spatial loss, and the spatial-temporal loss. The temporal loss may be propagated backward according to the chain rule in each time step, and as the number of time steps increases, a gradient for each weight may be accumulated.

According to an example embodiment, a computing device may perform backpropagation on spatial information of a last time step without reflecting the temporal loss and the spatial-temporal loss of the BPTT method. The computing device may reflect gradients for weights in real time while reducing memory usage and time complexity by reflecting temporal information to the maximum through a local memory on a network, thereby being suitable for on-chip learning and/or online learning.

The computing device may replace and reflect the temporal information, mainly focusing on a spatial weight update rule of an SGL method. The spatial weight update rule may be based on, for example, a loss, an activity of a pre-synaptic neuron, and an activity of a post-synaptic neuron. In the SGL method, to represent the activity of the pre-synaptic neuron as hardware, a current-based LIF neuron model may be used.

According to the roll-up diagram 301, the SNN calculates a loss for all time steps (t=1, 2, .. T-1, and T) during forward propagation and performs backpropagation on a spatial loss in a last time step (t=T) among given time steps. The computing device may use four surrogate strategies to extend a gradient in the last time step of the SNN, which will be described in detail below. Hereinafter, the term "surro-" may be added to refer to surrogate strategies used in the SNN according to an example embodiment.

Referring to the roll-up diagram 303, a SOLO algorithm may follow a forward path through time steps and consider a backward path only for a last step. The SOLO algorithm may update the SNN by the spatial gradient in the last

time step to reduce memory complexity and time complexity, thereby being effective in online learning.

In the backward path, the SOLO algorithm may propagate gradients to all elements of the SNN, ignoring a spatial gradient between accumulative neurons and an occurrence of a spike of a last layer of the SNN. In this case, the spatial gradient may refer to a gradient in a direction from top to bottom in the roll-up diagram 303, i.e., in a direction from $L_{SOLO}[T]$ to $S^{l-1}[T]$. The temporal gradient may refer to a gradient in a direction from right to left, i.e., in a direction from $U^l[T]$ to $U^l[1]$. In addition, the spatial-temporal gradient may refer to a gradient in a direction from bottom to top in the roll-up diagram 301, i.e., in a direction from $S^{l-1}[T]$ to $L_{SOLO}[T]$.

In this case, a gradient chain of the SOLO algorithm may be dependent on spatial gradients in a final step, and thus may not require backpropagation along temporal dimensions and spatial-temporal dimensions. Such an operation may indicate that a neuromodulator, which may be interpreted as an error signal of the SNN, is not secreted continuously but released spatially on a specific period.

The four surrogate strategies may train the SNN only using a spatial gradient in a last time step and may complement or extend gradient components (e.g., a temporal gradient and a spatial-temporal gradient) that are ignored during a learning process, thereby improving the accuracy of the SNN that is degraded by the ignored gradient components. Surrogate strategy 1 (simply "Surro 1") to surrogate strategy 3 (simply "Surro 3") may always be applied to train the SNN, but surrogate strategy 4 (simply "Surro 4") may be applied selectively.

The four surrogate strategies may be simplified as follows.

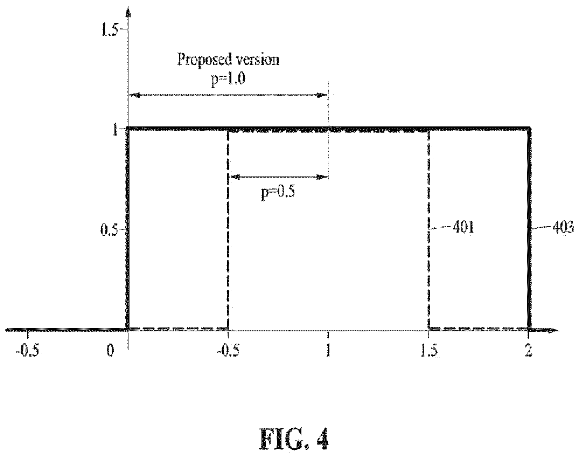

1) Surro 1 is to use an extended boxcar function for an activity of a post-synaptic neuron. A membrane potential has temporal information (e.g., temporal loss) due to the reflection of the LIF neuron model, and a value obtained as the temporal information passes through a surrogate kernel is reflected in the weight update rule. Surro 1 will be described in more detail below with reference to FIG. 4.

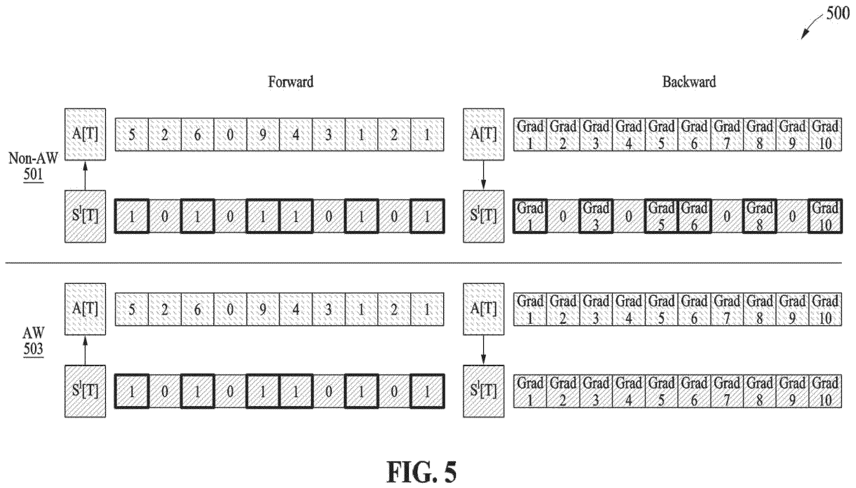

2) Surro 2 is to use an always-on strategy of a spike counter. According to Surro 2, the computing device may ignore a spatial gradient between the spike counter (e.g., the spike counter circuit 171 of FIG. 1) and an occurrence of an output spike of the SNN but may fix the spatial gradient always as "1" to extend a gradient in the last time step of the SNN. The computing device may extend and apply the spatial gradient between an accumulative neuron and the occurrence of the output spike of the SNN through Surro 2. Surro 2 will be described in more detail below with reference to FIG. 5.

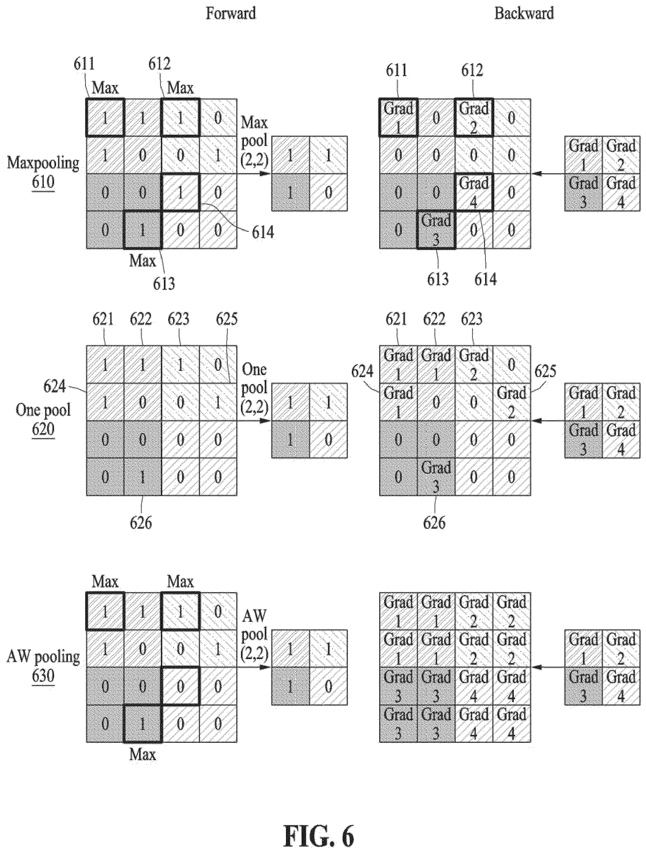

3) Surro 3 is to perform always-on pooling or one pooling. The term "pooling" used herein may refer to performing a pooling operation to reduce the size of a feature map by downsampling the feature map of the SNN, which may be performed by a pooling layer. The computing device may perform a max pooling operation to select a largest value from a pooling area (e.g., window) during forward propagation, but may extend and apply a gradient through the pooling during backpropagation to extend the gradient in the last time step of the SNN. Surro 3 will be described in more detail below with reference to FIG. 6.

4) Surro 4 is to use an eligible potential generation circuit (e.g., the eligible potential generation circuits 130 of FIG. 1). The computing device may represent an activity of a pre-synaptic neuron as a computation of an eligible potential and an eligible spike. In this case, the term "eligible trace" may refer to replacing previously visited states (e.g., previous neurons) with information that may currently refer to, determining a state that affects a specific cost function, and distributing it to the state. In this case, the specific cost function may include an error and a reward to be currently obtained. That is, in a case in which a current time step is t and the time step becomes t+n, a membrane potential value accumulated up to a point at which the time step becomes t+n may be calculated as an output spike value in n time steps, and a weight function of visited neurons in the n time steps may be updated. The eligible trace, which may reflect temporal data about an input spike signal applied to the SNN, may be reflected in the weight update rule. For the eligible trace, a binary spike may be used.

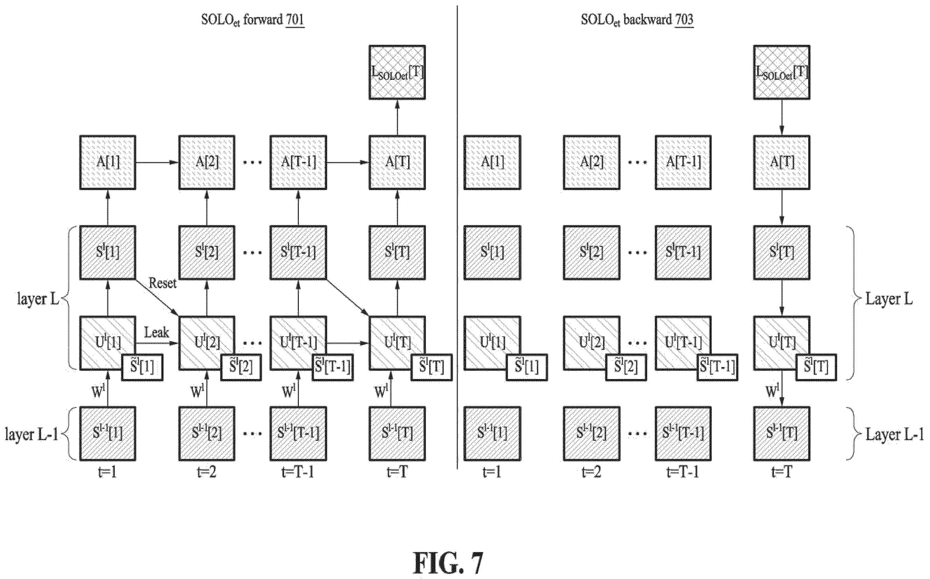

Through the eligible trace, the computing device may change and express a gradient over time to spatial information or a trace value that may refer to at the corresponding time, and thus may not calculate a temporal gradient chain. This may indicate that a computational amount along the time axis does not increase as a time step increases, that is, time complexity is independent of the time step. Surro 4 will be described in more detail below with reference to FIGS. 7 to 11.

FIG. 4 is a graph illustrating an extended boxcar function used as a kernel function in an SNN according to an example embodiment.

Referring to FIG. 4, graph 401 shows a general boxcar function, and graph 403 shows an extended boxcar function according to Surro 1 according to an example embodiment. In the graphs 401 and 403 shown in FIG. 4, an X-axis may correspond to membrane potential values, and a Y-axis may correspond to spike values.

A boxcar function may refer to a function that outputs zero (0) across an entire real number line except for a single interval such as a constant A. The general boxcar function may have a window p of 0.5, which controls a membrane potential range through which a gradient may pass, as shown in the graph 401. In contrast, the extended boxcar function may have a window p of 1.0, which controls a membrane potential range through which a gradient may pass, as shown in

the graph 403.

A computing device may use an SG method to solve an issue that may arise due to a non-differentiable nature of an activation function of a spiking neuron near a membrane potential threshold of the neuron, i.e., a "dead neuron problem" that may arise as weights of neurons are not updated. The computing device may replace the activation function of the spiking neuron, which is non-differentiable near the membrane potential threshold of the neuron, with a surrogate kernel, during backpropagation. The surrogate kernel may correspond to the extended boxcar function, and may also be referred to as a "boxcar kernel" in that the boxcar function is used as a kernel. The computing device may use, as the surrogate kernel, a boxcar function that is efficient for on-chip operation because an output value is 0 or 1. During the back-propagation of the activation function of the spiking neuron, gradients may flow more abundantly.

A membrane potential of a neuron may have temporal information due to the reflection of a LIF neuron model, and the temporal information may be reflected in the weight update rule as a value passed through the surrogate kernel.

The extended boxcar function shown in the graph 403 may be expressed as Equation 4 below.

[Equation 4]

$$\frac{\partial S[T]}{\partial U[T]} = \Theta'(U[t] - \vartheta_{\mathrm{th}}) \to \mathbb{1}_U = \sigma'(U^l[T]) = \Theta(|U[t] - \vartheta_{\mathrm{th}}| < p)$$

In Equation 4, $\sigma(\cdot)$ denotes a boxcar kernel.

$$\mathbb{1}_U$$

denotes a result of a membrane potential, i.e., a value obtained after the membrane potential passes through the boxcar kernel. p denotes a window that controls a membrane potential range through which a gradient may pass. U denotes a membrane potential, and $\vartheta_{th}$ denotes a membrane potential threshold. $\Theta$ denotes a Heaviside function.

The boxcar kernel may output values of 0 and 1, which are easy to implement in hardware, for values according to a specific membrane potential range (e.g., a gradient range ($\vartheta_{th}$ - p, $\vartheta_{th}$ + p)). The boxcar kernel may be implemented as a switch using a transistor.

In an example embodiment, a window value p may be an optimized hyperparameter. The computing device may set the window value p to "1" in the graph 403, which is wider than "0.5" in the graph 401, to propagate gradients to membrane potentials of more neurons in the last time step of the SNN.

The computing device may expand a hardware-friendly boxcar kernel range to 0 to 2, as shown in the graph 403, and extend and apply a spatial gradient, thereby firing values that are far away than the membrane potential threshold.

In summary, during backpropagation, the computing device may replace an activation function of spiking neurons with an extended boxcar function in which a window controlling a membrane potential range through which gradients may pass is extended. In this case, the spiking neurons may correspond to spiking neurons near the membrane potential threshold.

FIG. 5 is a diagram illustrating an operation of a spike counter of an SNN according to an example embodiment. In the forward propagation path of FIG. 5, S[T] serves as an indicator of whether an output spike is generated from a particular neuron (e.g., S[T]=1 representing the occurrence of an output spike), and A[T] indicates the accumulation of the output spikes generated by the specific neuron (e.g., A[T]=5 representing that the output spike has been generated five times from the specific neuron). In the backpropagation path of FIG. 5, S[T] serves as an indicator of whether a gradient is propagated to a specific neuron (e.g., S[T]=1 representing the gradient being propagated, and S[T]=0 representing the gradient not being propagated), and A[T] indicates a gradient value to be applied to the specific neuron. Referring to FIG. 5, diagram 501 shows forward propagation and backpropagation operations of spiking neurons in which a spike counter by accumulative neurons A(T) selectively operates (i.e., the spike counter does not always operate) according to one embodiment, and diagram 503 shows forward propagation and backpropagation operations of spiking neurons in which a spike counter by accumulative neurons A(T) always operates according to another embodiment.

As spikes of spiking neurons $S^L[T]$ fire during forward propagation as shown in the diagram 501, membrane potential values of the accumulative neurons A(T) may be accumulated, and during backpropagation, a gradient (or loss) may be propagated to spiking neurons depending on whether an output spike occurs in a corresponding spiking neuron during the forward propagation. That is, the gradient may be propagated back to first, third, fifth, sixth, eighth, and tenth spiking neurons at which output spikes occur during the forward propagation.

In contrast, as shown in the diagram 503, unlike the membrane potential values of the accumulative neurons A(T) corresponding to the spiking neurons $S^L[T]$ fired during the forward propagation are accumulated, during the back-

propagation, the gradient may be propagated to all the spiking neurons regardless of whether an output spike occurs during the forward propagation. In this case, accumulative neurons may be directly involved in generating a loss.

In the SNN according to an example embodiment, a spike output from the last layer or the last time step may be an output spike of a corresponding neural network model. To extend a gradient in the last time step of the SNN, the computing device may ignore a spatial gradient between a spike counter (e.g., the spike counter 171 of FIG. 1) and an occurrence of an output spike of the SNN (e.g., the SNN 150) but always fix the spatial gradient to "1," as shown in the diagram 503.

The computing device may propagate the gradient to all the spiking neurons regardless of whether the spiking neurons $S^L[T]$ fire during forward propagation of loss values, and may thereby apply an extended spatial gradient between the accumulative neurons A(T) and the occurrence of the output spike of the SNN and may successfully transmit a loss for all classes in the last time step of the SNN.

When potentials of accumulative neurons are filled by spikes of spiking neurons, the computing device may select an accumulative neuron having the highest potential value. The computing device may calculate an MSE loss between the potential value of the selected accumulative neuron and a ground truth or an MSE loss between the potential value of the selected accumulative neuron and a label from one-hot encoding and may propagate backward the calculated MSE loss.

The output spike generated in the last layer during the backpropagation of loss may contribute to the calculation of a spatial gradient that connects the accumulative neurons A(T). However, to ensure richer and more direct gradients, the computing device may ignore the spatial gradient as shown in the diagram 503 of FIG. 5 and always fix the spatial gradient to "1" for all neurons, as expressed in Equation 5 below.

[Equation 5]

$$\frac{\partial A[T]}{\partial S^L[T]} \rightarrow 1$$

In Equation 5, A[T] denotes an accumulative neuron A in a time step T, and $S^L[T]$ denotes a spiking neuron $S^L$ in the time step T.

In summary, the computing device may backpropagate a loss value of the last layer of the SNN to all the spiking neurons, regardless of whether the spiking neurons fire during the forward propagation of the loss value.

FIG. 6 is a diagram illustrating an always-on pooling operation according to an example embodiment. Referring to FIG. 6, diagram 600 shows max pooling 610, one pooling 620, and always-on pooling 630, which are used during forward propagation and backpropagation of an SNN.

As shown in the FIG. 6, the max pooling 610, the one pooling 620, and the always-on pooling 630 may all produce the same result in a forward propagation operation, while they may produce different results in a backpropagation operation.

When using the max pooling 610, the computing device may extract a maximum value within an area overlapping a kernel during forward propagation of a loss value, and, during backpropagation of the loss value, the computing device may propagate gradients only for elements 611, 612, 613, and 614 from which a feature (e.g., the maximum value) is selected during the forward propagation.

When using the one pooling 620, the computing device may also extract the maximum value within the area overlapping the kernel during the forward propagation of the loss value, in a similar way as in the max pooling 610. However, during the backpropagation of the loss value, the computing device may propagate gradients for six elements 621, 622, 623, 624, 625, and 626 having spike values during the forward propagation.

When using the always-on pooling 630, the computing device may extract the maximum value within the area overlapping the kernel, in a similar way as in the max pooling 610, during the forward propagation of the loss value. In contrast, during the backpropagation of the loss value, the computing device may extend and apply gradients regardless of whether a spike occurs. Therefore, during the backpropagation of the loss value, the gradients may be propagated to all 16 elements.

For example, a time at which the gradients are propagated may be different for each time step. However, when using the always-on pooling 630, the computing device may propagate the gradients to all the elements of the kernel at the same time, thereby providing all the elements with the same chance to apply the gradients. Using the always-on pooling 630 may increase an update probability.

FIG. 7 is a diagram illustrating an operation of an eligible potential generation circuit according to an example embodiment. FIG. 7 shows a forward propagation operation 701 and a backpropagation operation 703 by a SOLOet algorithm in which an eligible trace (or "et") by an eligible spike (or eligible potential) is further considered in addition to

whether a spike occurs.

In the BPTT method described above, gradients of spikes in time steps may be represented as eligible potentials in the form of leaky integration LI. In the BPTT method, all spatial-temporal gradients may be substantially represented in the LI form of specific spikes. This may be understood that when a spike is output temporally and a gradient corresponding to the spike exists, the gradient may be represented in the LI form of the corresponding spike. In this case, converting a temporal gradient into a spatial gradient may be referred to as an "eligible strategy" or "eligible trace."

In an example embodiment, using an eligible potential generation circuit that extends this representation and replaces gradients of spikes in a final time step of an SNN with the calculation of eligible spikes over time steps may increase the number of eligible spike candidates during weight update. The eligible potential generation circuit may consider further an eligible spike $\tilde{S}^l[T]$ in addition to whether a general spike occurs. The eligible spike may be calculated according to the concept of an eligible trace described above. In an example embodiment, more spatial gradients may be generated by replacing general spikes with eligible spikes.

The computing device may express an activity of a pre-synaptic neuron as computation of an eligible potential $\tilde{U}^l[T]$ and an eligible spike $\tilde{S}^l[T]$.

First, the computing device may calculate an eligible potential $\tilde{U}^l[T]$ during a forward propagation operation in the SNN. The computing device may calculate the eligible spike $\tilde{U}^l[T]$ by applying a clamp function having a value of 0 or 1 to the eligible potential $\tilde{U}^l[T]$ and performing binarization. When the eligible potential $\tilde{U}^l[T]$ exceeds a threshold $\tilde{\vartheta}_{th}$ of the eligible potential $\tilde{U}^l[T]$, an output spike signal may be generated. In this case, a gradient of the output spike signal may be represented as "grad $\in$ {0, 1}" by the binarization, and the size of the eligible potential $\tilde{U}^l[T]$ may be limited by the binarization.

The eligible spike $\tilde{S}^l[T]$ calculated through the foregoing process may replace a spike, which is a computational element of weight update. The computing device may extend the eligible spike $\tilde{S}^l[T]$ that replaces the spike to a spatial gradient to which temporal information is added for each layer, thereby increasing the number of eligible spike candidates updated in the last time step.

The eligible trace may reflect temporal data for an input spike and be reflected in a weight update rule. For the eligible trace, binary spikes may be used.

An operation of the eligible potential generation circuit that replaces gradients of spikes in the final time step T of the SNN with the computation of the eligible potential $\tilde{U}^l[T]$ and the eligible spike $\tilde{S}^l[T]$ through time steps may be expressed as Equation 6 below.

[Equation 6]

$$\begin{cases} \tilde{U}^l[T] = k(\alpha^l \tilde{U}^l[T-1] + aS^{l-1}[T]) \\ \tilde{S}^l[T] = \Theta(\tilde{U}^l[T] - \tilde{\vartheta}_{\text{th}}) \end{cases}$$

In Equation 6, $\tilde{U}^l[T]$ may denote an eligible potential of a layer l. k(·) may denote a clamp function. $\alpha^l = exp(-1/\tau^l_{spk})$ may denote a potential decaying constant of the layer l. $\tau^l_{spk}$ may denote a time constant of an eligible spike. The time constant $\tau^l_{spk}$ of the eligible spike may be a learnable parameter and may be shared by the same 126 layers of the SNN. In addition, $\alpha$ may denote a scaling constant.

In addition, $S^{l-1}$ may denote an occurrence of an output spike of a neuron j in a layer l-1. $\tilde{S}^l[T]$ may denote an eligible spike of the layer l. $\Theta(\cdot)$ may denote a Heaviside function. $\tilde{\vartheta}_{th}$ may denote a threshold of the eligible spike. The threshold $\tilde{\vartheta}_{th}$ of the eligible spike may be different from a threshold $\vartheta_{th}$ of an action potential (or membrane potential) of the neurons described above.

In Equation 6, $\alpha^l\tilde{U}^l[T-1]$ may correspond to a membrane potential of a spike of a previous time step. The eligible potential $\tilde{U}^l[T]$ may be calculated during forward propagation of a loss. $\alpha^l\tilde{U}^l[T-1]$ may be remembered by the RC circuit. In addition, $aS^{l-1}[T]$ may correspond to a scaled spike of a current time step.

For example, during forward propagation shown in the diagram 701, when an output spike $S^{l-1}[1]$ is output from a pre-synaptic neuron in a previous layer l-1, a weight sum of the output spike $S^{l-1}[1]$ and a weight $W^l$ corresponding to the layer l may be transmitted to a membrane potential $U^l[1]$. In this case, a value transmitted to the membrane potential $U^l[1]$ may output a spike to a post-synaptic neuron of the layer l through comparison with the threshold. For example, when the value transmitted to the membrane potential $U^l[1]$ is greater than the threshold $U_{th}$ of an action potential (or membrane

potential), the spike may be output to the post-synaptic neuron of the layer l. As the spike is output from the post-synaptic neuron of the layer l, a membrane potential $U^l[2]$ may be reset to "0."

In this case, the value of the output spike $S^{l-1}[1]$ transmitted to the membrane potential $U^l[1]$ may be equally transmitted to a separate memory present below on the right side of the membrane potential $U^l[1]$ to be used to generate a eligible spike $\tilde{S}^l[1]$. The computing device may scale and binarize the value of the output spike $S^{l-1}[1]$ transmitted to the memory to generate the eligible spike $\tilde{S}^l[1]$.

The foregoing process may be performed repeatedly from time step 1 to time step T. In this case, leakage may occur in a membrane potential $U^l$ over time.

The computing device may store eligible spike values $\tilde{S}^l$ as an eligible potential value (e.g., real value) in the memory for each time step and may use it in replacement of a spike corresponding to a corresponding time step. In this case, the eligible potential value and the membrane potential value may be different.

During the backpropagation of the loss value, the computing device may compare the eligible potential value stored in the memory to a threshold value $spk_{th}$ of an eligible spike. This comparison may be performed by a threshold comparator 930, which will be described below. When the eligible potential value is greater than or equal to the threshold value $spk_{th}$ of the eligible spike, the computing device may generate the eligible spike. When the eligible potential value is less than the threshold value $spk_{th}$ of the eligible spike, the computing device may accumulate the eligible potential value. The computing device may then use the eligible spike to update weights for the SNN. The threshold value $spk_{th}$ of the eligible spike may be, for example, 0.5, but is not necessarily limited thereto.

The computing device may change an eligible potential to an eligible spike through the process described above, and use the eligible spike for training the SNN, i.e., backpropagation of a loss for weight update.

In this case, a threshold $\tilde{\vartheta}_{th}$ of the eligible spike, a scaling constant a, a time constant $\tau^l_{spk}$ of the eligible spike may correspond to learnable parameters. The learnable parameters may have better results by using pre-learned initial values, for example, ones shown in Table 1 below.

[Table 1]

| param | Initial Value | param | Initial Value |
|---|---|---|---|
| C | 128 | $\tau^A_{acc,init}$ | 2.0 |
| $\tau^l_{mem,init}$ | 2.0 | $\tau^l_{spk,init}$ | 0.5 |
| $\vartheta_{th}$ | 0.5 | $\tilde{\vartheta}_{th}$ | -0.35 |
| $p$ | 1.0 | $a$ | -0.8 |

Equation 7 below may be used to activate gradient propagation toward the time constant $\tau^l_{spk}$ of the eligible spike, which is one of the parameters.

[Equation 7]

$$\begin{cases} \dfrac{\partial U_i^l[T]}{\partial \tilde{S}^l[T]} = \dfrac{\partial U^l[T]}{\partial \tilde{s}[T]} \dfrac{\partial \tilde{s}[T]}{\partial \tilde{S}^l[T]} = W^l \\ \dfrac{\partial \tilde{S}^l[T]}{\partial \tilde{U}^l[T]} = \Theta'(\tilde{U}^l[t] - \tilde{\vartheta}_{\text{th}}) \rightarrow \mathbb{1}^l_{\tilde{U}} = \Theta(\tilde{U}[t] > \tilde{p}) \end{cases}$$

**In** Equation 7, $\tilde{s}(\cdot)$ may denote a switch function. $\mathbb{1}^l_{\tilde{U}}$ may correspond to a result of applying a Heaviside kernel

to an eligible potential. $\tilde{p}$ may denote a window that controls a potential range through which a gradient may pass. $W^1$ may denote a weight of a layer l.

An eligible spike $\tilde{S}^l[T]$ that serves as a surrogate gradient of a spike for weight update may then be derived as expressed by Equation 8 below.

The eligible potential generation circuit may finally use a value obtained from Equation 8 as a value obtained by differentiating a membrane potential generated in a gradient chain of a weight update rule by a weight.

[Equation 8]

$$\frac{\partial U^l[T]}{\partial W^l} = \mathbb{1}_S^{l-1} = S^{l-1}[T] \rightarrow \mathbb{1}_{\tilde{S}}^{l} = \tilde{S}^l[T]$$

In Equation 8,

$$\mathbb{1}_S^{l-1}$$

may denotes an occurrence of a spike in a layer l - 1.

$$\mathbb{1}_{\tilde{S}}^{l}$$

*l* may denote an eligible spike in the layer l.

The computing device may provide an eligible spike according to the concept and computation process of an eligible trace, and extend and apply a spatial gradient according to the spike occurrence through the eligible spike.

In addition, the computing device may denote potentials of accumulative neurons in a final layer using a firing rate that is given as A[T]/T and calculate an MSE loss. In this case, A[T] may denote an accumulative neuron A in a time step T.

A loss function of SOLO, $L_{SOLO}$, may be expressed as Equation 9 below.

[Equation 9]

$$L_{SOLO} = L_{MSE}(A[T]/T, \hat{y})$$

In Equation 9, $\hat{y}$ may denote a target label.

According to the chain rule, slopes of $W_{ij}^l$ and $\tau_{mem}^l$ , which are the learnable parameters, may be expressed as Equation 10 below.

[Equation 10]

$$\begin{cases} \frac{\partial L_{SOLO}}{\partial W^l} = \delta^l[T]\frac{\partial S^l[T]}{\partial U^l[T]}\frac{\partial U^l[T]}{\partial W^l} = \delta^l[T]\mathbb{1}_U^l\mathbb{1}_S^{l-1} \\ \frac{\partial L_{SOLO}}{\partial \tau_{mem}^l} = \delta^l[T]\frac{\partial S^l[T]}{\partial U^l[T]}\frac{\partial U^l[T]}{\partial \tau_{mem}^l} = \delta^l[T]\mathbb{1}_U^l\frac{\partial U^l[T]}{\partial \tau_{mem}^l} \end{cases}$$

In Equation 10, $\delta^l[T]$ may denote a surrogate kernel and may be expressed as Equation 11 below.

[Equation 11]

$$\delta^l[T] = \frac{\partial L_{SOLO}}{\partial S^l[T]} = \begin{cases} A[T]/T - \hat{y} & \text{if } l = L \\ \delta^{l+1}[T]\frac{\partial S^{l+1}[T]}{\partial U^{l+1}[T]}\frac{\partial U^{l+1}[T]}{\partial S^l[T]} = \delta^{l+1}[T]\mathbb{1}_U^l W^l & \text{if } l < L \end{cases}$$

In Equation 11, L may denote a total number of layers of the SNN.

In an example embodiment, for training the SNN, a first SOLO algorithm to which surrogate strategies 1 to 3, i.e., Surro1 to Surro3, are applied and a second online learning algorithm (e.g., SOLOet) to which the eligible potential generation circuit of surrogate strategy 4, i.e., Surro4, is applied may all be considered.

In the first SOLO algorithm, no gradient may be generated in remaining time steps except the last time step, but a gradient may be generated only in the last time step. In addition, because the first SOLO algorithm ignores a temporal loss and a spatial-temporal loss, it may not generate gradients for a membrane potential and a spike. In addition, in the second surrogate online learning algorithm, SOLOet, a spike trace and the eligible potential generation circuit may be added to each of all layers of the SNN.

According to the chain rule, the slopes of the learnable parameters may be derived as expressed in Equation 12 below.

[Equation 12]

$$\begin{cases} \frac{\partial L_{SOL_{et}}}{\partial W^l} = \delta^l[T]\frac{\partial S^l[T]}{\partial U^l[T]}\frac{\partial U^l[T]}{\partial W^l} = \delta^l[T]\mathbb{1}_U^l\mathbb{1}_S^l \\ \frac{\partial L_{SOL_{et}}}{\partial \tau_{spk}^l} = \delta^l[T]\frac{\partial S^l[T]}{\partial U^l[T]}\frac{\partial U^l[T]}{\partial \tilde{S}^l[T]}\frac{\partial \tilde{S}^l[T]}{\partial \tilde{U}^l[T]}\frac{\partial \tilde{U}^l[T]}{\partial \tau_{spk}^l} = \delta^l[T]\mathbb{1}_U^l W_{ij}^l \mathbb{1}_{\tilde{U}}^l\frac{\partial \tilde{U}^l[T]}{\partial \tau_{spk}^l} \end{cases}$$

Learning surrogate gradients may be construed as a learning rule of three elements from surrogate strategy 1 Surro1 to surrogate strategy 3 Surro3 described above. A general weight from a layer l to a layer l-1 and a gradient of the first SOLO algorithm for a connection between two neurons (e.g., neurons i and j) may be expressed as Equation 13 below.

[Equation 13]

$$\frac{\partial L_{SOL_{et}}}{\partial W_{ij}^{l}} = \frac{\partial L_{SOL_{et}}}{\partial S_i^l[T]} \frac{\partial S_i^l[T]}{\partial U_i^l[T]} \frac{\partial U_i^l[T]}{\partial W_{ij}^{l}} = \frac{\partial L_{SOL_{et}}}{\partial S_i^l[T]} \Theta'(U_i^l[t] - \vartheta_{th}) S_j^{l-1}[T] \rightarrow \delta_i^l[T] \mathbb{1}_{U_i}^l \mathbb{1}_{\tilde{S}_i}^l$$

In Equation 13, $\delta_i^l$ may denote a global modulator.

$$\mathbb{1}_{U_i}^l$$

may denote a surrogate gradient of a membrane potential of a post-synaptic neuron, which indicates an activity of the post-synaptic neuron.

$$\mathbb{1}_{\tilde{S}_i}^l$$

may denote an activity of a traced pre-synaptic neuron.

The global modulator $\delta_i^l$, the surrogate gradient

$$\mathbb{1}_{U_i}^l$$

of the membrane potential of the postsynaptic neuron, and the activity

$$\mathbb{1}_{\tilde{S}_i}^l$$

of the traced pre-synaptic neuron may be of a type of the three-element learning rule. Weights may be partially updated with a global signal that uses a current-based LIF neuron model to represent the activity

$$\mathbb{1}_{\tilde{S}_i}^l$$

and eligibility of the pre-synaptic neuron. However, it may not be easy to embed the current-based LIF neuron model in hardware.

Accordingly, in an example embodiment, the activity of the pre-synaptic neuron may be represented in the form of binarization calculated by an LI method that is similar to the dynamics of neurons while using a simple LIF neuron model including the eligible potential generation circuit.

FIG. 8 is a diagram illustrating an eligible trace by an eligible potential generation circuit according to an example embodiment. Referring to FIG. 8, graph 800 shows a modified sigmoid function (e.g., modified_sigmoid) for a clamp function for an eligible potential of an eligible potential generation circuit according to an example embodiment.

In the gradient chain of the BPTT method, a spike trace $\overline{S}^l[t]$ of a layer 1 may be represented in the form of a low-

pass filter (LPF) as expressed by Equation 14 below.

[Equation 14]

$$\bar{S}^l[t] = \beta\bar{S}^l[t-1] + S^l[t]$$

In Equation 14 above, β may denote a membrane potential decaying constant. $\bar{S}^l$ may denote a spike trace of a layer l. $S^l$ may denote an occurrence of an output spike of a neuron in the layer l. t may denote a time step.

In an example embodiment, an eligible spike approximated from the concept of the spike trace expressed as Equation 14 may be used. However, because the spike trace may have a value greater than 0, the spike trace may be converted to a binary representation using the clamp function and a threshold value as expressed in Equation 15 below.

[Equation 15]

$$modified_sigmoid(x) = \frac{1}{1+e^{(-(x-0.5)*8)}}$$

The computing device may allow a value of the clamp function represented by the modified sigmoid function, modified_sigmoid, to be limited to a range of 0 and 1 centered at (0.5, 0.5). Limiting the value of the clamp function to be within the range of 0 and 1 may ensure that an eligible potential remains within a desired range. In addition, a threshold value (e.g., 0.5) may be applied to convert the eligible potential to a binary representation that is referred to as an eligible spike. In this case, the computing device may consider a gradient flowing to a parameter $\tau^l_{spk}$.

FIG. 9 is a diagram illustrating an example of a CBA circuit in which an eligible potential generation circuit is implemented according to an example embodiment. FIG. 9 shows an eligible potential generation circuit 130 implemented as a circuit on a CBA of an SNN 150 according to an example embodiment.

The eligible potential generation circuit 130 may represent an activity of a pre-synaptic neuron of the SNN 150 and apply an eligible trace to update weights of the SNN 150. The eligible potential generation circuit 130 may be applied by being replaced with a gradient computation element of the chain rule on the CBA 900 in the form of a binary local temporal memory.

The eligible potential generation circuit 130 may include at least one of an eligible potential circuit 910, a threshold comparator 930, or a flag generator 950.

The eligible potential circuit 910 may receive a pulse from the pulse generator 110 and may calculate a time-dependent eligible potential value corresponding to the received pulse in the form of LI by an RC circuit.

The threshold comparator 930 may compare the eligible potential value of the eligible potential circuit 910 to a threshold of an eligible spike. The threshold comparator 930 may include, for example, an operational amplifier (OP-AMP) circuit or a bi-stable circuit with a series of NOT gates, but is not necessarily limited thereto.

The flag generator 950 may store a flag value corresponding to the eligible spike based on a result of the threshold comparison described above. In this case, the flag value may be applied as a pulse that selects a synaptic cell 151 from rows of the CBA 900 constituting the SNN 150.

During forward propagation in the eligible potential generation circuit 130, an input of the CBA 900 of the SNN 150 and an input of the eligible potential generation circuit 130 may be calculated (or computed) in parallel and may be distinguished from each other. In this case, the pulse generator 110 may generate a pulse corresponding to a spike as an input to a row of the CBA 900 of the SNN 150 and directly apply the pulse. At the same time, each eligible potential generation circuit 130 may also receive a pulse corresponding to a spike from the pulse generator 110.

During the forward propagation, each eligible potential generation circuit 130 may compute an eligible potential. The eligible potential generation circuit 130 may include, for example, the RC circuit including a resistor R and a capacitor C. In the RC circuit, the resistance R may be implemented as a variable resistance and may be learned according to a gradient of the chain rule.

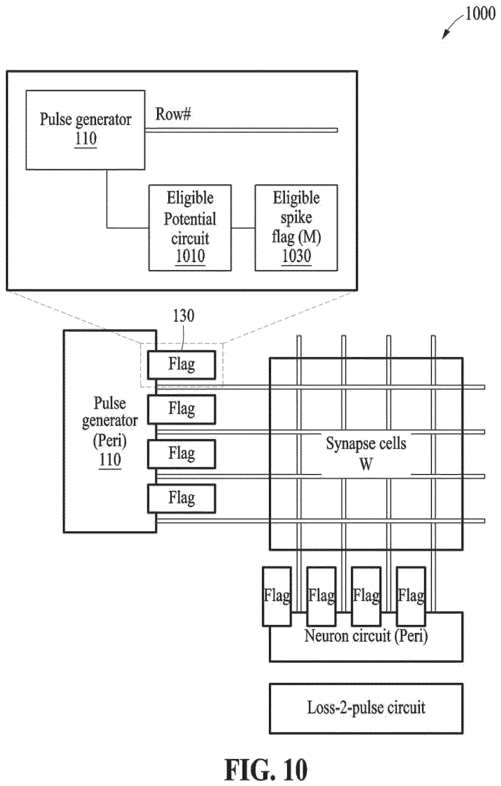

The eligible potential generation circuit 130 may calculate a potential value over time in the form of LI through the RC circuit. For example, an eligible potential circuit 1010, which will be described below with reference to FIG. 10, may be implemented as the RC circuit.

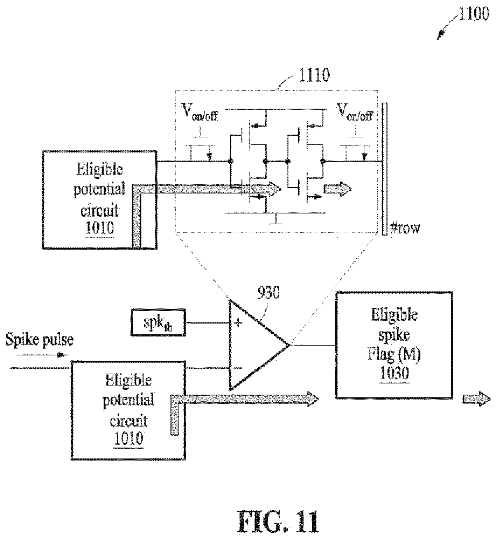

The RC circuit may receive a pulse corresponding to a spike generated by the pulse generator 110. The pulse may be applied to the RC circuit as an eligible potential value. The threshold comparator 930 may compare the eligible

potential value to a threshold of an eligible spike. Based on a result of the comparison from the threshold comparator 930, a value of 0 or 1 corresponding to the eligible spike may be output through the flag generator 950 implemented as a transistor. The value of 0 or 1 output in this way may be stored as a value of an eligible spike flag 1030, which will be described below with reference to FIG. 10. The threshold comparator 930 may be configured as, for example, an OP-AMP, but is not necessarily limited thereto. The threshold comparator 930 may include two NOT gates as shown in FIG. 11.

In addition, when using a leakage current of one transistor-one capacitor (1T 1C) with a capacitor attached to one of a source terminal and a drain terminal of the flag generator 950, the eligible potential generation circuit 130 may be implemented along with a memory with a potential degradable characteristic, i.e., a memory with low retention, such as, for example, a flash memory. During backpropagation, the eligible potential generation circuit 130 may calculate an eligible spike by discretizing an eligible potential. The eligible potential generation circuit 130 may use a method by which power is applied only at a specific time, such as, for example, during backpropagation. After calculating the eligible spike, the eligible potential generation circuit 130 may apply Von/off in the form of a binary value of 0 or 1 to the flag generator 950 implemented with a transistor corresponding to a switch as shown in to reflect the binary value of 0 or 1 in the CBA 900 of the SNN 150. In this case, the binary value 0 or 1 may be applied as a pulse that selects a synaptic cell in a row of the CBA 900 of the SNN 150. That is, the row may be selected from the CBA 900 of the SNN 150 by the value of 0 or 1 output from the flag generator 950. In this case, the flag generator 950 may adjust a time for applying the eligible spike.

For the eligible potential generation circuit 130, using a switch function denoted as $\tilde{s}(\cdot)$, for example, may not generate a spike on a backward path but use an eligible spike.

In this case, the switch function $\tilde{s}(\cdot)$ may output only one variable during a forward path. When two variables are received, the switch function may use a left variable during forward propagation, but may block a gradient flowing to the left variable to allow the gradient to flow to a right variable during backpropagation. Therefore, when using an eligible spike, a spike that has already occurred may be used during forward propagation, but when calculating a gradient, an eligible spike may be used instead of a spike occurrence.

The eligible potential generation circuit 130 may maintain a gradient chain for any two variables ($F, \tilde{F}$) during a backward pass to ensure that a gradient is propagated to the two variables. In this case, a slope of the two variables ($F$, $\tilde{F}$) may be 1 as expressed in Equation 16 below.

[Equation 16]

$$\tilde{s}(F, \tilde{F}) = F$$

$$\frac{\partial \tilde{s}(F, \tilde{F})}{\partial F} = \frac{\partial \tilde{s}(F, \tilde{F})}{\partial \tilde{F}} \rightarrow 1$$

Therefore, in an example embodiment, a switch function with an eligible spike may be used as expressed in Equation 17 below.

[Equation 17]

$$\tilde{s}(S^l[T], \tilde{S}^l[T]) = S^l[T]$$

$$\frac{\partial \tilde{s}(S^l[T], \tilde{S}^l[T])}{\partial S^l[T]} = \frac{\partial \tilde{s}(S^l[T], \tilde{S}^l[T])}{\partial \tilde{S}^l[T]} \rightarrow 1$$

Equation 17 may correspond to a gradient chain that occurs in a process of replacing an eligible spike using the switch function. By taking a partial derivative of each of a spike occurrence and an eligible spike with respect to the switch function, the gradient chain may be generated for each of the spike occurrence and the eligible spike. The method of replacing an eligible spike using the switch function is provided herein as an example of various known replacement methods, and examples of which are not necessarily limited thereto.

In an example embodiment, the partial derivative value of each of the spike occurrence and the eligible spike with

respect to the switch function may be set to "1" in the process such that a corresponding gradient value is ignored.

FIG. 10 is a block diagram illustrating an eligible potential generation circuit according to an example embodiment. FIG. 10 shows an eligible potential generation circuit 1000.

The eligible potential generation circuit 1000 may include an eligible potential circuit 1010 and an eligible spike flag 1030. The eligible spike flag 1030 may also be referred to as a "surrogate flag."

The eligible potential circuit 1010 may receive a pulse corresponding to a spike generated by the pulse generator 110. The pulse may be applied as an eligible potential value to an RC circuit corresponding to the eligible potential circuit 1010. The threshold comparator 930 may compare the eligible potential value to a threshold $spk_{th}$ of an eligible spike. Based on a result of the comparison from the threshold comparator 930, the eligible spike flag 1030 of 0 or 1 corresponding to the eligible spike may be generated and/or stored. A flag shown on the right side of the pulse generator 110 in FIG. 10 may represent the eligible spike of 0 or 1.

A computing device may store the eligible spike flag 1030 in a last time step of an SNN.

FIG. 11 is a diagram illustrating an example of a threshold comparator for an eligible spike according to an example embodiment. Referring to FIG. 11, diagram 1100 shows an example of the threshold comparator 930 for an eligible spike of an eligible potential generation circuit according to an example embodiment.

A time-dependent potential calculated in the form of LI in the eligible potential circuit 1010 of the eligible potential generation circuit may be compared in the threshold comparator 930 and may then be stored as the eligible spike flag 1030 corresponding to a binary output value of 0 or 1. In this case, the threshold comparator 930 may be configured as a bi-stable circuit 1110 similar to a static random-access memory (SRAM).

In an example embodiment, a regenerative characteristic of the bi-stable circuit 1110 may be used to perform the threshold comparison. The bi-stable circuit 1110 may be, for example, a circuit with two NOT gates in a row, but is not necessarily limited thereto. The bi-stable circuit 1110 may directly reflect a leaky spike value output from the eligible potential circuit 1010 without using a binarization circuit.

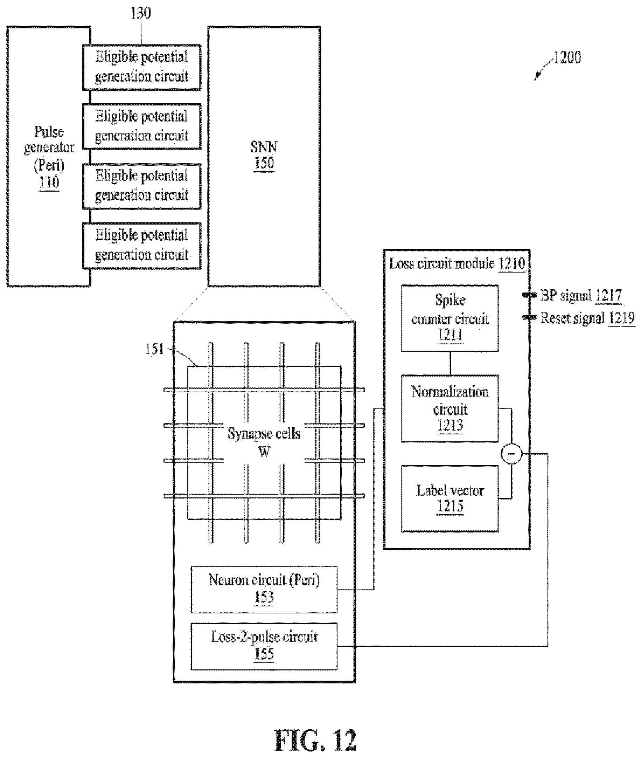

FIG. 12 is a diagram illustrating a structure and operations of a loss circuit module of an SNN according to an example embodiment. Referring to FIG. 12, a computing device 1200 may include a pulse generator 110, eligible potential generation circuits 130, an SNN 150, and a loss circuit module 1210.

The loss circuit module 1210 may include a spike counter circuit 1211, a normalization circuit 1213, and a label vector 1215. The loss circuit module 1210 may be based on a specific loss, such as, for example, a cross-entropy loss and/or MSE loss. The loss circuit module 1210 may transmit, to the normalization circuit 1213, a potential accumulated in the spike counter circuit 1211 for all time steps. The loss circuit module 1210 may represent, as a loss value, a difference between the potential value transmitted to the normalization circuit 1213 and a value stored in the label vector 1215. The loss value calculated in the loss circuit module 1210 may be transmitted back to a loss-2-pulse circuit 155 of the SNN 150. The loss-2-pulse circuit 155 may generate a pulse corresponding to the transmitted loss value and transmit the pulse to a neuron circuit 153. The neuron circuit 153 may apply a learning rate value to the loss value and reflect it in the weight update rule.

The loss circuit module 1210 may not operate for all the time steps but may operate in a specific time step by receiving a specific signal.

For the operations of the spike counter circuit 1211, reference may be made to the operations of the spike counter circuit 171 described above with reference to FIG. 1. In addition, for the operations of the normalization circuit 1213, reference may be made to the operations of the normalization circuit 173 described above with reference to FIG. 1.

In addition, for a BP signal 1217 and a reset signal 1219, reference may be made to what has been described above regarding the BP signal 177 and the reset signal 179 with reference to FIG. 1.

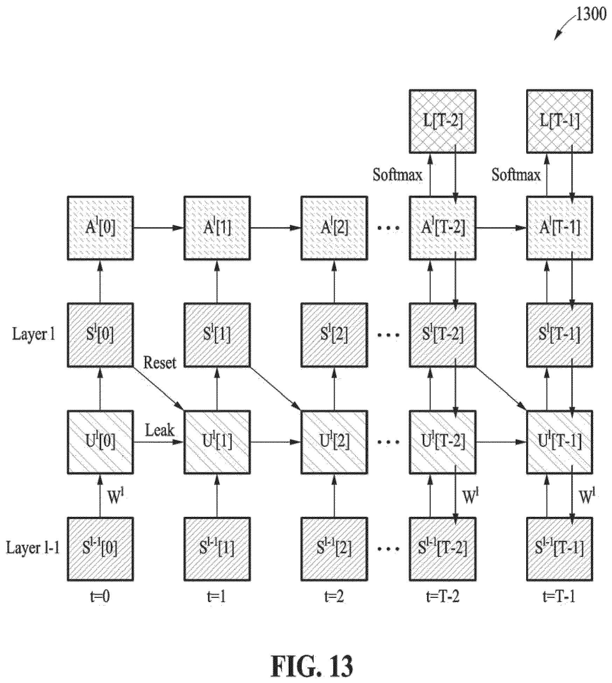

FIG. 13 is a diagram illustrating a method of performing backpropagation in a specific time step of a SOLO algorithm used to train an SNN according to an example embodiment. Referring to FIG. 13, roll-up diagram 1300 shows backpropagation performed in a specific time step according to an example embodiment.

A computing device may perform backpropagation on a spatial loss in a specific time step among time steps given for forward propagation. Potentials may be mainly filled in accumulative neurons, and backpropagation of spatial errors may be performed in successive time steps based on a last time step. In the roll-up diagram 1300, a time step in which the backpropagation described above is performed may be referred to as a "BP step."

The computing device may receive a BP signal in the BP step but may not receive a reset signal every time. For example, the reset signal may operate after the BP signal operates in the last time step of given time steps for an image.

The backpropagation shown in FIG. 13 may be performed mainly on static data.

The computing device may update a weight W for one input data through several time steps. In this case, as a time step increases, a temporal gradient, a spatial gradient, and/or a spatial-temporal gradient may increase. When a gradient increases, the amount of the weight W update may increase, and a frequency of the weight W selected to be updated may also increase. When a weight is desirably selected and updated through an increase in the weight update by an increase in gradient, a learning effect may increase, and the accuracy may converge fast.

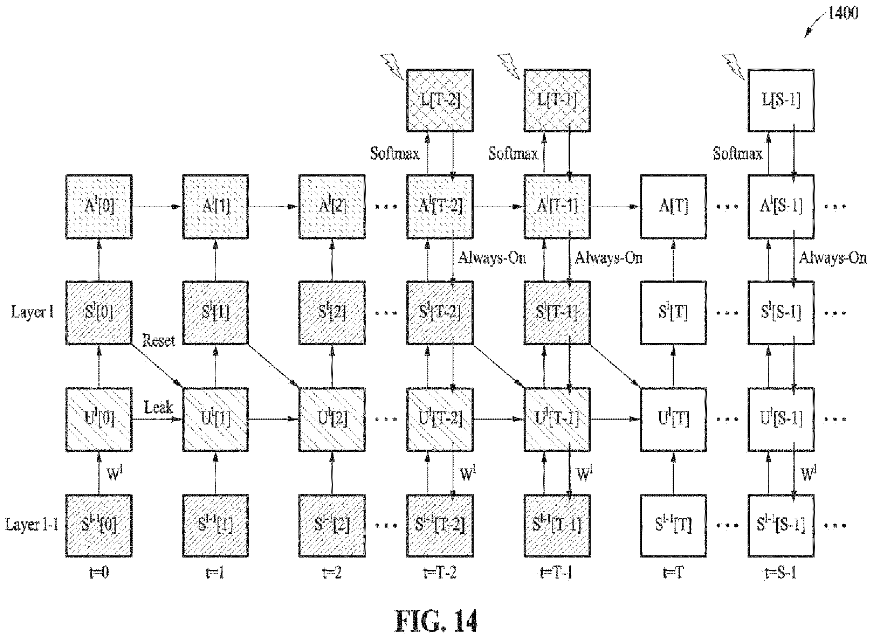

FIG. 14 is a diagram illustrating a method of performing backpropagation in a specific time step of a SOLO

algorithm by receiving a signal from a specific module of an SNN according to an example embodiment. Referring to FIG. 14, roll-up diagram 1400 shows backpropagation performed for a spatial error in a time step selected from a specific module of an SNN according to an example embodiment.

A computing device may perform backpropagation of spatial errors in a given time step of forward propagation. In this case, a loss circuit module of the computing device may receive a signal from a specific module and perform backpropagation in a specific time step.

The computing device may not perform backpropagation for successive time steps of a BP step but may perform backpropagation by receiving a BP signal from a specific operation module that selects the BP step. In this case, the specific operation module may correspond to a module that processes metadata such as context data and feature data but is not necessarily limited thereto.

In the BP step, the computing device may receive a BP signal but may not receive a reset signal every time. For example, the reset signal may operate after the BP signal operates in a last time step of given time steps for one data. In this case, the reset signal may be periodically applied in a given time step to reset a potential of an accumulative neuron. The backpropagation shown in FIG. 14 may be applied mainly to temporal data.

The computing device may update a weight for one input data several times over time, and as described above, as the number of updates is repeated, the frequency of the selected weight may increase. This may allow the computing device to learn about temporal data, and when performing the weight update at a high frequency, reduce the convergence speed of accuracy.

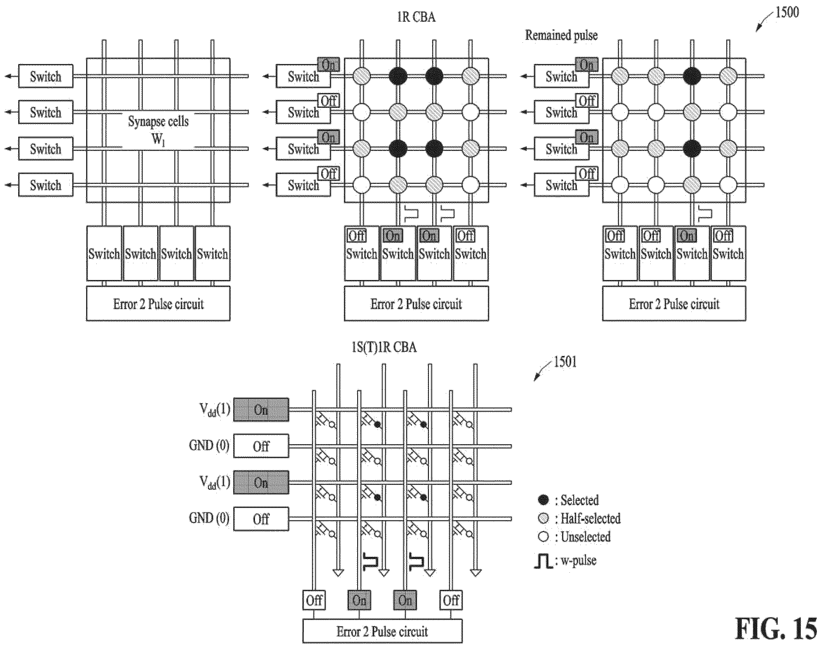

FIG. 15 is a diagram illustrating an example of a CBA system in which an SNN is implemented according to an example embodiment. Referring to FIG. 15, diagram 1500 shows a CBA without a selector S, and diagram 1501 shows a CBA with the selector S according to an example embodiment.

According to an example embodiment, weight update may be readily and intuitively implemented in a CBA application of a resistance-based non-volatile memory (NVM).

A computing device may ease a half-selected phenomenon by selecting a weight through a switch added to the CBA as shown in the diagram 1500 or by selecting a weight through on-off type Vdd and ground (GND). In this case, the half-selected phenomenon may correspond to a practical hardware issue occurring when a memory array is generated in the form of a CBA, which is referred to as computing in memory (CIP), and such a system performs deep neural network (DNN) computation and updates weights. To update the weights, a specific cell may need to be selected from the memory array. In this case, when a row and column of the memory array are selected to select the specific cell, only one side of the memory positioned in the corresponding row and column may be selected, which may correspond to the half-selected phenomenon. In this case, when only the one side of the memory is selected, the weights may be updated in an unintended way. The computing device may update the weights by transmitting a weight update pulse or a programming pulse for a selected weight.

An algorithm according to an example embodiment may prevent or reduce the half-selected phenomenon by selecting a weight through a switch added to the CBA or by selecting a weight through an on-off type Vdd and GND.

Alternatively, the computing device may resolve the half-selected phenomenon by binarizing an eligible potential to 0 or 1 through the selector as shown in the diagram 1501.

The update of a weight $w_{ij}^{l}$ in the CBA using the SOLO algorithm according to an example embodiment may be expressed as Equation 18 below.

[Equation 18]

$$\frac{\partial L_{SOLO}}{\partial w_{ij}^{l}} = \delta_i^l[T]\frac{\partial S_i^{l-1}[T]}{\partial U_i^l[T]}\frac{\partial U_i^l[T]}{\partial w_{ij}^l} = (A[T]/T - \hat{y})\,\sigma'(U_i^l)S_j^{l-1}[T]$$

In Equation 18, $(A[T]/T - \hat{y})$ may correspond to a loss term of the SNN. $\sigma'(U_i^l)$ may correspond to a membrane potential value of a post-synaptic neuron that has passed through a surrogate kernel. $\sigma'(U_i^l)$ may have a value of 0 or 1. In addition, $S_j^{l-1}[T]$ may correspond to a spike value of a pre-synaptic neuron. $S_j^{l-1}[T]$ may also have a value of 0 or 1.

In an example embodiment, calculating information of the pre-synaptic neuron and the post-synaptic neuron to

be 0 or 1 using the SOLO algorithm may facilitate the implementation in hardware.

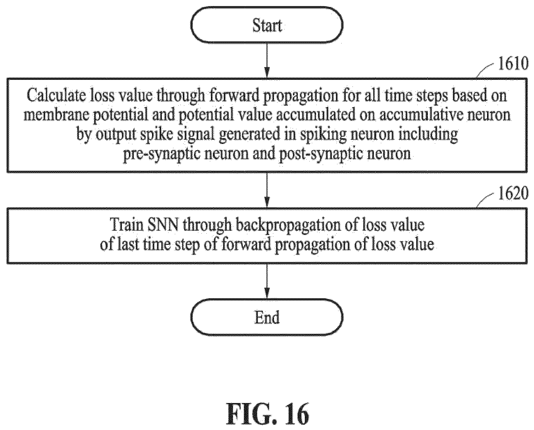

FIG. 16 is a flowchart illustrating a training method performed by a computing device to train an SNN according to an embodiment. Referring to FIG. 16, an SNN of a computing device according to an embodiment includes layers including pre-synaptic neurons, membrane potentials, post-synaptic neurons, and accumulative neurons. Each of the layers trains the SNN through operations 1610 and 1620 described below.

In operation 1610, the computing device calculates a loss value through forward propagation for all time steps based on a membrane potential and a potential value accumulated in an accumulative neuron by an output spiking signal generated from a spiking neuron including a pre-synaptic neuron and a post-synaptic neuron.

In operation 1610, the computing device performs the following operations for each of all the time steps. The computing device receives an output spike signal output from a pre-synaptic neuron of a previous layer. The computing device may transmit, to a membrane potential, a potential value that is obtained by calculating a weighted sum of a potential value accumulated by the output spike signal and a weight corresponding to a current layer. The computing device may output a loss value corresponding to the current layer based on a difference between the potential value transmitted to the membrane potential and a membrane potential threshold value. The computing device may calculate an eligible spike value by scaling and binarizing the output spike signal with a clamp function. The computing device may store the eligible spike value in a memory as an eligible potential value for each time step.

In operation 1620, the computing device trains the SNN by backpropagating a loss value of a last time step of the forward propagation of the loss value. The computing device may compare the eligible potential value stored in the memory to a threshold value of an eligible spike. In this case, when the eligible potential value is greater than or equal to the threshold value of the eligible spike, the computing device may generate the eligible spike and update a weight for the SNN to train the SNN.

The examples described herein may be implemented using hardware components, software components and/or combinations thereof. A processing device may be implemented using one or more general-purpose or special purpose computers, such as, for example, a processor, a controller, an arithmetic logic unit (ALU), a digital signal processor, a microcomputer, a field programmable gate array (FPGA), a programmable logic unit (PLU), a microprocessor, or any other device capable of responding to and executing instructions in a defined manner. The processing device may run an operating system (OS) and one or more software applications that run on the OS. The processing device also may access, store, manipulate, process, and create data in response to execution of the software. For the purpose of simplicity, the description of a processing device is used as singular; however, one skilled in the art will be appreciated that a processing device may include multiple processing elements and multiple types of processing elements. For example, a processing device may include multiple processors or a processor and a controller. In addition, different processing configurations are possible, such as, parallel processors.

The software may include a computer program, a piece of code, an instruction, or some combination thereof, to independently or collectively instruct or configure the processing device to operate as desired. Software and/or data may be embodied permanently or temporarily in any type of machine, component, physical or virtual equipment, computer storage medium or device, or in a propagated signal wave capable of providing instructions or data to or being interpreted by the processing device. The software also may be distributed over network-coupled computer systems so that the software is stored and executed in a distributed fashion. The software and data may be stored by one or more non-transitory computer-readable recording mediums.

The methods according to the above-described examples may be recorded in non-transitory computer-readable media including program instructions to implement various operations of the above-described examples. The media may also include, alone or in combination with the program instructions, data files, data structures, and the like. The program instructions recorded on the media may be specially designed and constructed for the purposes of examples, or they may be of the kind well-known and available to those having skill in the computer software arts. Examples of non-transitory computer-readable media include magnetic media such as hard disks, floppy disks, and magnetic tape; optical media such as CD-ROM discs, DVDs, and/or Blue-ray discs; magneto-optical media such as optical discs; and hardware devices that are specially configured to store and perform program instructions, such as ROM, RAM, flash memory (e.g., USB flash drives, memory cards, memory sticks, etc.), and the like. Examples of program instructions include both machine code, such as produced by a compiler, and files containing higher-level code that may be executed by the computer using an interpreter.

The above-described hardware devices may be configured to act as one or more software modules in order to perform the operations of the above-described examples, or vice versa.

## Claims

1. A computing device comprising as hardware modules:

a pulse generator (110) configured to generate a pulse corresponding to an input spike signal;
a spiking neural network, SNN, (150) comprising layers of spiking neurons configured to generate an output spike signal in response to the pulse being received from the pulse generator (110); and
a loss circuit module (170, 1210) configured to calculate a loss value based on a potential value accumulated by the output spike signal and backpropagate the loss value to the SNN (150),
wherein each layer of the SNN (150) comprises a pre-synaptic neuron (201), a membrane potential, a post-synaptic neuron (203), and an accumulative neuron, and
wherein the loss circuit module (170, 1210) is further configured to calculate the loss value for all time steps of forward propagation, and to backpropagate the loss value of only a last time step of the forward propagation.

**2.** The computing device of claim 1, wherein the SNN (150) comprises at least one of:

a plurality of synaptic cells configured to store weight values in a crossbar array;
a neuron circuit (153) that is based on a current-based leaky integrate-and-fire, LIF, neuron model in which an activity of a pre-synaptic neuron (201) among the spiking neurons is reflected; or
a loss-2-pulse circuit (155) configured to receive the loss value calculated by the loss circuit module (170), generate a pulse corresponding to the loss value, and transmit the pulse to the neuron circuit (153).

**3.** The computing device of claim 1 or 2, wherein the loss circuit module (170, 1210) is further configured to:
normalize the accumulated potential value and calculate the loss value based on a difference between the normalized potential value and a label vector.

**4.** The computing device of claim 3, wherein the loss circuit module (170, 1210) comprises:

a spike counter circuit (171, 1211) configured to accumulate the potential value obtained from the output spike signal;
a normalization circuit (173, 1213) configured to normalize the accumulated potential value; and
a loss circuit (175) configured to calculate the loss value based on the difference between the normalized potential value and the label vector.

**5.** The computing device of one of claims 1 to 4, wherein the SNN (150) is further configured to:

during backpropagation, replace an activation function of the spiking neurons with an extended boxcar function in which a window configured to regulate a membrane potential range for passing gradients is extended, or
backpropagate, to all the spiking neurons, the loss value of a last layer of the SNN (150), regardless of whether the spiking neurons fire during forward propagation of the loss value, or
during the backpropagation of the loss value, propagate the loss value to all elements of a kernel at a same time.

**6.** The computing device of one of claims 1 to 5, further comprising:
an eligible potential generation circuit (130) configured to receive the pulse, calculate an eligible potential value corresponding to the pulse, and transmit the calculated eligible potential value as the output spike signal to the SNN (150).

**7.** The computing device of claim 6, wherein the eligible potential generation circuit (130) is further configured to:

calculate the eligible potential value by applying a clamp function to a result of adding a membrane potential value of a spike of a previous time step and a scaled spike value of a current time step, and the eligible potential generation circuit (130) being further configured to calculate an eligible spike by applying a Heaviside function to a difference between the eligible potential value and a threshold value of the eligible spike, or
wherein the SNN (150) is further configured to compute a weighted sum of the output spike signal that is output from the eligible potential generation circuit (130) using a weight stored in a synaptic cell of the SNN (150), and store the weighted sum in a neuron circuit (153) of the SNN (150).

**8.** The computing device of claim 6, wherein the eligible potential generation circuit (130) comprises at least one of:

an eligible potential circuit (910) configured to calculate the eligible potential value according to time corresponding to the pulse to be in a leaky-integration, LI, form by a resistor-capacitor circuit;
a threshold comparator (930) configured to compare the eligible potential value to a threshold value of an eligible

spike; or
a flag generator (950) configured to store a flag value corresponding to the eligible spike based on a comparison between the eligible spike and the threshold value.

9. The computing device of claim 8, wherein the SNN (150) comprises a crossbar array, and the flag value is applied as a pulse that selects a synaptic cell from rows of the crossbar array, or
wherein the threshold comparator (930) comprises an operational amplifier circuit or a bistable circuit comprising a series of NOT gates.

10. The computing device of one of claims 1 to 9, wherein the loss circuit module (170, 1210) is configured to:

in response to a backpropagation signal being input, calculate the loss value and backpropagate the loss value to the SNN (150); and
in response to a reset signal, reset the accumulated potential value stored in a spike counter circuit (171) of the loss circuit module (170, 1210).

11. A training method performed by a computing device according to one of claims 1 to 10, wherein the training method comprises performing for each layer of the SNN (150) by the loss circuit module (170, 1210):

calculating (1610) a loss value through forward propagation for all time steps based on the membrane potential and a potential value accumulated in the accumulative neuron in response to an output spike signal generated from a spiking neuron, the spiking neuron comprising the pre-synaptic neuron (201) and the post-synaptic neuron (203); and
training (1620) the SNN (150) by backpropagating a loss value of only a last time step of the forward propagation of the loss value.

12. The training method of claim 11, wherein the calculating (1610) of the loss value through the forward propagation performed by the computing device comprises:

for each of all the time steps,
receiving the output spike signal that is output from the pre-synaptic neuron (201) of a previous layer;
transmitting, to the membrane potential, a value obtained by a weighted sum of the potential value accumulated by the output spike signal and a weight corresponding to a current layer;
outputting a loss value corresponding to the current layer based on a difference between the value transmitted to the membrane potential and a membrane potential threshold value;
calculating an eligible spike value by scaling the output spike signal based on a clamp function and performing binarization; and
storing, in a memory, the eligible spike value as an eligible potential value for each of the time steps.

13. The training method of claim 12, wherein the training (1620) of the SNN (150) performed by the computing device comprises:

comparing the eligible potential value stored in a memory to a threshold value of an eligible spike; and
in response to the eligible potential value being greater than or equal to the threshold value of the eligible spike, generating the eligible spike and updating a weight for the SNN (150) to train the SNN (150).

14. A non-transitory computer-readable storage medium storing instructions which, when executed by a computing device according to one of claims 1 to 10, cause the computing device to perform a training method according to claim 11.

## Patentansprüche

1. Computervorrichtung, die als Hardwaremodule umfasst:

einen Impulsgenerator (110), der dazu eingerichtet ist, einen Impuls zu erzeugen, der einem Eingangs-Spike-Signal entspricht;
ein Spiking-Neuronalnetzwerk (SNN) (150), das Schichten aus Spiking-Neuronen umfasst und dazu eingerichtet

ist, ein Ausgangs-Spike-Signal als Reaktion auf den von dem Impulsgenerator (110) empfangenen Impuls zu erzeugen; sowie

ein Verlustschaltungsmodul (170, 1210), das dazu eingerichtet ist, einen Verlustwert auf der Grundlage eines durch das Ausgangs-Spike-Signal akkumulierten Potentialwertes zu berechnen und den Verlustwert an das SNN (150) rückwärts auszubreiten,

wobei jede Schicht des SNN (150) ein präsynaptisches Neuron (201), ein Membranpotential, ein postsynaptisches Neuron (203) und ein akkumulatives Neuron umfassen, und

das Verlustschaltungsmodul (170, 1210) weiterhin dazu eingerichtet ist, den Verlustwert für sämtliche Zeitschritte der Vorwärtsausbreitung zu berechnen und den Verlustwert nur eines letzten Zeitschritts der Vorwärtsausbreitung rückwärts auszubreiten.

**2.** Computervorrichtung nach Anspruch 1, bei der das SNN (150) wenigstens eines der folgenden Elemente umfasst:

eine Vielzahl von synaptischen Zellen, die dazu eingerichtet sind, Gewichtswerte in einem Kreuzverbund-Array zu speichern;

eine Neuronenschaltung (153), die auf einem stromgestützten "Leaky Integrate-and-Fire"-, (LIF-), Neuronmodell basiert, in dem eine Aktivität eines präsynaptischen Neurons (201) unter den Spiking-Neuronen widergespiegelt wird; oder

eine "Loss-2-Pulse"-Schaltung (155), die dazu eingerichtet ist, den von dem Verlustschaltungsmodul (170) berechneten Verlustwert zu empfangen, einen dem Verlustwert entsprechenden Impuls zu erzeugen und den Impuls an die Neuronenschaltung (153) zu senden.

**3.** Computervorrichtung nach Anspruch 1 oder 2, bei der das Verlustschaltungsmodul (170, 1210) weiterhin dazu eingerichtet ist:
den akkumulierten Potentialwert zu normalisieren und den Verlustwert auf der Grundlage einer Differenz zwischen dem normalisierten Potentialwert und einem LabelVektor zu berechnen.

**4.** Computervorrichtung nach Anspruch 3, bei der das Verlustschaltungsmodul (170, 1210) umfasst:

eine Spike-Zählerschaltung (171, 1211), die dazu eingerichtet ist, den aus dem Ausgangs-Spike-Signal gewonnenen Potentialwert zu akkumulieren;

eine Normalisierungsschaltung (173, 1213), die dazu eingerichtet ist, den akkumulierten Potentialwert zu normalisieren; und

eine Verlustschaltung (175), die dazu eingerichtet ist, den Verlustwert auf der Grundlage der Differenz zwischen dem normalisierten Potentialwert und dem Labelvektor zu berechnen.

**5.** Computervorrichtung nach einem der Ansprüche 1 bis 4, bei dem das SNN (150) weiterhin dazu eingerichtet ist:

während der Rückwärtsausbreitung eine Aktivierungsfunktion der Spiking-Neuronen durch eine erweiterte Boxcar-Funktion zu ersetzen, bei der ein Fenster, das so eingerichtet ist, dass es einen Membranpotentialbereich für die Durchlassung von Gradienten reguliert, erweitert wird, oder

den Verlustwert einer letzten Schicht des SNN (150) rückwärts auszubreiten, unabhängig davon, ob die Spiking-Neuronen während der Vorwärtsausbreitung des Verlustwertes feuern, oder

während der Rückwärtsausbreitung des Verlustwertes den Verlustwert gleichzeitig auf sämtliche Elemente eines Kernels auszubreiten.

**6.** Computervorrichtung nach einem der Ansprüche 1 bis 5, weiterhin umfassend:
eine Schaltung (130) zur Erzeugung eines zulässigen Potenzials, die dazu eingerichtet ist, den Impuls zu empfangen, einen dem Impuls entsprechenden Wert für das zulässige Potenzial zu berechnen und den berechneten Wert für das zulässige Potenzial als Ausgangs-Spike-Signal an das SNN (150) zu senden.

**7.** Computervorrichtung nach Anspruch 6, bei der die Schaltung (130) zur Erzeugung eines zulässigen Potenzials weiterhin dazu eingerichtet ist:

den zulässigen Potentialwert zu berechnen, indem eine Klemmfunktion auf das Ergebnis der Addition eines Membranpotentialwertes eines Spikes eines vorherigen Zeitschritts und eines skalierten Spike-Wertes eines aktuellen Zeitschritts angewendet wird, und die Schaltung zur Erzeugung eines zulässigen Potentials (130) weiterhin dazu eingerichtet ist, einen zulässigen Spike zu berechnen, indem eine Heaviside-Funktion auf die

Differenz zwischen dem zulässigen Potentialwert und einem Schwellenwert des zulässigen Spikes angewendet wird, oder
das SNN (150) weiterhin dazu eingerichtet ist, eine gewichtete Summe des von der Schaltung zur Erzeugung eines zulässigen Potenzials (130) ausgegebenen Spike-Signals unter Verwendung eines in einer synaptischen Zelle des SNN (150) gespeicherten Gewichts zu berechnen und die gewichtete Summe in einer Neuronenschaltung (153) des SNN (150) zu speichern.

**8.** Computervorrichtung nach Anspruch 6, bei der die Schaltung zum Erzeugen eines zulässigen Potenzials (130) wenigstens eines der folgenden Elemente umfasst:

eine Schaltung (910) für ein zulässiges Potential, die dazu eingerichtet ist, den Wert des zulässigen Potenzials entsprechend der dem Impuls entsprechenden Zeit in Form einer Leckintegration (LI) mittels einer Widerstand-Kondensator-Schaltung zu berechnen;
einen Schwellenwertkomparator (930), der dazu eingerichtet ist, den Wert des zulässigen Potenzials mit einem Schwellenwert eines zulässigen Spikes zu vergleichen; oder
einen Flag-Generator (950), der dazu eingerichtet ist, einen dem zulässigen Spike entsprechenden Flag-Wert auf der Grundlage eines Vergleichs zwischen dem zulässigen Spike und dem Schwellenwert zu speichern.

**9.** Computervorrichtung nach Anspruch 8, bei der das SNN (150) ein Crossbar-Array umfasst und der Flag-Wert als Impuls angelegt wird, der eine synaptische Zelle aus den Zeilen des Crossbar-Arrays auswählt, oder
der Schwellenwertkomparator (930) eine Operationsverstärkerschaltung oder eine bistabile Schaltung umfasst, die eine Reihe von NOT-Gattern umfasst.

**10.** Computervorrichtung nach einem der Ansprüche 1 bis 9, bei der das Verlustschaltungsmodul (170, 1210) dazu eingerichtet ist:

als Reaktion auf die Eingabe eines Rückwärtsausbreitungssignals den Verlustwert zu berechnen und den Verlustwert an das SNN (150) rückwärts auszubreiten; und
als Reaktion auf ein Rücksetzsignal den in einer Spike-Zählerschaltung (171) des Verlustschaltungsmoduls (170, 1210) gespeicherten kumulierten Potentialwert zurückzusetzen.

**11.** Trainingsverfahren, das von einer Computervorrichtung gemäß einem der Ansprüche 1 bis 10 durchgeführt wird, wobei das Trainingsverfahren umfasst, dass das Verlustschaltungsmodul (170, 1210) für jede Schicht des SNN (150) durchführt:

Berechnen (1610) eines Verlustwertes durch Vorwärtsausbreitung für sämtliche Zeitschritte auf der Grundlage des Membranpotentials und eines in dem akkumulierenden Neuron akkumulierten Potentialwertes als Reaktion auf ein von einem Spiking-Neuron erzeugtes Ausgangs-Spike-Signal, wobei das Spiking-Neuron das präsynaptische Neuron (201) und das postsynaptische Neuron (203) umfasst; und
Trainieren (1620) des SNN (150) durch Rückwärtsausbreiten eines Verlustwertes, der sich ausschließlich auf den letzten Zeitschritt der Vorwärtsausbreitung des Verlustwertes bezieht.

**12.** Trainingsverfahren nach Anspruch 11, bei dem das Berechnen (1610) des Verlustwertes durch die von der Computervorrichtung durchgeführte Vorwärtsausbreitung umfasst:

für sämtliche der Zeitschritte,
Empfangen des Ausgangs-Spike-Signals, das von dem präsynaptischen Neuron (201) einer vorhergehenden Schicht ausgegeben wird;
Senden eines Wertes an das Membranpotential, der durch eine gewichtete Summe des durch das Ausgangs-Spike-Signal akkumulierten Potentialwertes und eines der aktuellen Schicht entsprechenden Gewichtes erhalten wird;
Ausgeben eines der aktuellen Schicht entsprechenden Verlustwertes auf der Grundlage einer Differenz zwischen dem an das Membranpotential gesendeten Wert und einem Schwellenwert des Membranpotentials;
Berechnen eines zulässigen Spike-Wertes durch Skalieren des Ausgangs-Spike-Signals auf der Grundlage einer Klemmenfunktion und Durchführen einer Binarisierung; und
Speichern des zulässigen Spike-Wertes als zulässigen Potentialwert für jeden der Zeitschritte in einem Speicher.

**13.** Trainingsverfahren nach Anspruch 12, bei dem das von der Computervorrichtung durchgeführte Training (1620) des

SNN (150) umfasst:

Vergleichen des in einem Speicher gespeicherten zulässigen Potentialwertes mit einem Schwellenwert eines zulässigen Spikes; und
als Reaktion darauf, dass der zulässige Potentialwert größer oder gleich dem Schwellenwert des zulässigen Spikes ist, Erzeugen des zulässigen Spikes und Aktualisieren eines Gewichtes für das SNN (150), um das SNN (150) zu trainieren.

**14.** Nichtflüchtiges, computerlesbares Speichermedium, auf dem Anweisungen gespeichert sind, die, wenn sie von einer Computervorrichtung gemäß einem der Ansprüche 1 bis 10 ausgeführt werden, bewirken, dass die Computervorrichtung ein Trainingsverfahren gemäß Anspruch 11 durchführt.

**Revendications**

**1.** Dispositif informatique constitué de modules matériels :

un générateur d'impulsions (110) configuré pour générer une impulsion correspondant à un signal de pic en entrée ;
un réseau de neurones à impulsions, SNN (Spiking Neural Network), (150) comprenant des couches de neurones à impulsions configurés pour générer un signal de pic en sortie en réaction à l'impulsion reçue du générateur d'impulsions (110) ; et
un module de circuit de perte (170, 1210) configuré pour calculer une valeur de perte selon une valeur de potentiel cumulée par le signal de pic en sortie et pour rétropropager la valeur de perte vers le SNN (150),
dans lequel chaque couche du SNN (150) comprend un neurone pré-synaptique (201), un potentiel de membrane, un neurone post-synaptique (203) et un neurone cumulatif, et
dans lequel le module de circuit de perte (170, 1210) est configuré en outre pour calculer la valeur de perte pour toutes les étapes temporelles de propagation vers l'avant, et pour rétropropager la valeur de perte d'uniquement une dernière étape temporelle de la propagation vers l'avant.

**2.** Le dispositif informatique de la revendication 1, dans lequel le SNN (150) comprend au moins un de :

une pluralité de cellules synaptiques configurées pour stocker des valeurs de pondération dans un réseau de barres transversales ;
un circuit de neurones (153) qui repose sur un modèle de neurone LIF (Leaky Integrate-and-Fire) fondé sur un courant, dans lequel une activité d'un neurone pré-synaptique (201) parmi les neurones à impulsions est reflétée ; ou
un circuit perte-à-impulsion (loss-2-pulse) (155) configuré pour recevoir la valeur de perte calculé par le module de circuit de perte (170), générer une impulsion correspondant à la valeur de perte, et transmettre l'impulsion au circuit de neurones (153).

**3.** Le dispositif informatique de la revendication 1 ou 2, dans lequel le module de circuit de perte (170, 1210) est configurée en outre pour :
normaliser la valeur de potentiel cumulée et calculer la valeur de perte selon une différence entre la valeur de potentiel normalisée et un vecteur d'étiquette.

**4.** Le dispositif informatique de la revendication 3, dans lequel le module de circuit de perte (170, 1210) comprend :

un circuit de compteur de pics (171, 1211) configuré pour cumuler la valeur de potentiel obtenue à partir du signal de pic en sortie ;
un circuit de normalisation (173, 1213) configuré pour normaliser la valeur de potentiel cumulée ; et
un circuit de perte (175) configuré pour calculer la valeur de perte selon une différence entre la valeur de potentiel normalisée et un vecteur d'étiquette.

**5.** Le dispositif informatique de l'une des revendications 1 à 4, dans lequel le SNN (150) est configuré en outre pour :

au cours de la rétropropagation, remplacer une fonction d'activation des neurones à impulsions par une fonction boxcar étendue dans laquelle une fenêtre configurée pour réguler une plage de potentiel de membrane pour

transmettre des gradients est étendue, ou
rétropropager, vers tous les neurones à impulsions, la valeur de perte d'une dernière couche du SNN (150), que les neurones à impulsions se déclenchent ou non au cours d'une propagation vers l'avant de la valeur de perte, ou au cours de la rétropropagation de la valeur de perte, propager la valeur de perte à tous les éléments d'un noyau simultanément.

**6.** Le dispositif informatique de l'une des revendications 1 à 5, comprenant en outre :
un circuit de génération de potentiel éligible (130) configuré pour recevoir l'impulsion, calculer une valeur de potentiel éligible correspondant à l'impulsion, et transmettre la valeur de potentiel éligible calculée comme le signal de pic en sortie au SNN (150).

**7.** Le dispositif informatique de la revendication 6, dans lequel le circuit de génération de potentiel éligible (130) est configurée en outre pour :

calculer la valeur de potentiel éligible en appliquant une fonction clamp à un résultat d'ajout d'une valeur de potentiel de membrane d'un pic d'une étape temporelle précédente et une valeur de pic mise à l'échelle d'une étape temporelle courante, et le circuit de génération de potentiel éligible (130) étant en outre configuré pour calculer un pic éligible en appliquant une fonction Heaviside à une différence entre la valeur de potentiel éligible et une valeur de seuil du pic éligible, ou
dans lequel le SNN (150) est configuré en outre pour calculer une somme pondérée du signal de pic en sortie qui est produit à partir du circuit de génération de potentiel éligible (130) en utilisant une pondération stockée dans une cellule synaptique du SNN (150), et stocker la somme pondérée dans un circuit de neurones (153) du SNN (150).

**8.** Le dispositif informatique de la revendication 6, dans lequel le circuit de génération de potentiel éligible (130) comprend au moins un de :

un circuit potentiel éligible (910) configuré pour calculer la valeur de potentiel éligible selon un moment correspondant à l'impulsion à mettre en forme LI (Leaky-Integration) par un circuit de résistance-condensateur ;
un comparateur de seuil (930) configuré pour comparer la valeur de potentiel éligible à une valeur de seuil d'un pic éligible ; ou
un générateur d'indicateur (950) configuré pour stocker une valeur d'indicateur correspondant au pic éligible selon une comparaison entre le pic éligible et la valeur de seuil.

**9.** Le dispositif informatique de la revendication 8, dans lequel le SNN (150) comprend un réseau de barres transversales, et la valeur d'indicateur est appliquée comme une impulsion qui sélectionne une cellule synaptique à partir de rangées du réseau de barres transversales, ou
dans lequel le comparateur de seuil (930) comprend un circuit d'amplificateur opérationnel ou un circuit bistable comprenant une série de portes NOT.

**10.** Le dispositif informatique de la revendication 1 à 9, dans lequel le module de circuit de perte (170, 1210) est configurée pour :

en réaction à un signal de rétropropagation entré, calculer la valeur de perte et rétropropager la valeur de perte vers le SSN (150) ; et
en réaction à un signal de réinitialisation, réinitialiser la valeur de potentiel cumulée stockée dans un circuit de compteur de pics (171) du module de circuit de perte (170, 1210).

**11.** Procédé d'entraînement exécuté par un dispositif informatique selon l'une des revendications 1 à 10, dans lequel le procédé d'entraînement comprend une exécution pour chaque couche du SNN (150) par le module de circuit de perte (170, 1210) :

d'un calcul (1610) d'une valeur de perte à travers une propagation vers l'avant pour toutes les étapes temporelles selon le potentiel de membrane et une valeur potentielle cumulée dans le neurone cumulatif en réaction à un signal de pic en sortie généré à partir d'un neurone à impulsions, le neurone à impulsions comprenant le neurone pré-synaptique (201) et le neurone post-synaptique (203) ; et
d'un entraînement (1620) du SNN (150) en rétropropageant une valeur de perte d'uniquement une dernière étape temporelle de la propagation vers l'avant de la valeur de perte.

**12.** Le procédé d'entraînement de la revendication 11, dans lequel le calcul (1610) de la valeur de perte à travers la propagation vers l'avant exécutée par le dispositif informatique comprend :

pour chacune de toutes les étapes temporelles,
une réception du signal de pic en sortie qui est produit à partir du neurone pré-synaptique (201) d'une couche précédente ;
une transmission, au potentiel de membrane, d'une valeur obtenue par une somme pondérée de la valeur potentielle cumulée par le signal de pic en sortie et une pondération correspondant à une couche courante ;
une production en sortie d'une valeur de perte correspondant à la couche courante selon une différence entre la valeur transmise au potentiel de membrane et une valeur de seuil de potentiel de membrane ;
un calcul d'une valeur de pic éligible en mettant à l'échelle le signal de pic en sortie selon une fonction clamp et une exécution d'une binarisation ; et
un stockage, dans une mémoire, de la valeur de pic éligible comme une valeur de potentiel éligible pour chacune des étapes temporelles.

**13.** Le procédé d'entraînement de la revendication 12, dans lequel l'entraînement (1620) du SNN (150) exécuté par le dispositif informatique comprend :

une comparaison de la valeur potentielle éligible stockée dans une mémoire à une valeur de seuil d'un pic éligible ; et
en réaction à la valeur potentiel éligible supérieure ou égale à la valeur de seuil du pic éligible, une génération du pic éligible et une actualisation d'une pondération pour le SNN (150) pour entraîner le SNN (150).

**14.** Support de stockage non transitoire lisible par un ordinateur stockant des instructions qui, lorsqu'exécutées par un dispositif informatique selon une des revendications 1 à 10, font exécuter par le dispositif informatique un procédé d'entraînement selon la revendication 11.

130
100
Pulse generator (Peri) 110
Eligible potential generation circuit
Eligible potential generation circuit
Eligible potential generation circuit
Eligible potential generation circuit
SNN 150
Loss circuit module 170
Spike counter circuit 171
BP signal 177
Reset signal 179
Normalization circuit 173
Loss circuit 175
151
Synapse cells W
Neuron circuit (Peri) 153
Loss-2-pulse circuit 155

FIG. 1

200
205
201
'1'
'1'
'1'
Pre
Time
w
207
$u_{th}$
203
Post
Time
209
'1'
Time
T

FIG. 2A

210
x1
x2
x3
x4
Post-synaptic neuron
Binary events
Input spike
C
R
υ
Membrane potential
Accumulated input spike
Spike occurred
Spike
Spike
Spike
$u_{th}$
Membrane potential attenuated
Time
Refractory period

FIG. 2B

SOLO forward 301
SOLO backward 303
Layer l
Layer l-1
L_SOLO[T]
A[1]
A[2]
A[T-1]
A[T]
S^l[1]
S^l[2]
S^l[T-1]
S^l[T]
U^l[1]
U^l[2]
U^l[T-1]
U^l[T]
S^l-1[1]
S^l-1[2]
S^l-1[T-1]
S^l-1[T]
W^l
Reset
Leak
t=1
t=2
t=T-1
t=T

FIG. 3

1.5
Proposed version
p=1.0
1
p=0.5
0.5
401
403
-0.5
0
-0.5
1
1.5
2

FIG. 4

500
Forward
Backward
Non-AW
501
AW
503
A[T]
S[T]
5 2 6 0 9 4 3 1 2 1
1 0 1 0 1 1 0 1 0 1
Grad 1 Grad 2 Grad 3 Grad 4 Grad 5 Grad 6 Grad 7 Grad 8 Grad 9 Grad 10
Grad 1 0 Grad 3 0 Grad 5 Grad 6 0 Grad 8 0 Grad 10

FIG. 5

Forward
Backward
611
612
Max
Max
Maxpooling
610
Max pool (2,2)
614
613
621
622
623
625
624
626
One pool
620
One pool (2,2)
AW pooling
630
AW pool (2,2)
Grad 1
Grad 2
Grad 3
Grad 4


FIG. 6

SOLOet forward 701
SOLOet backward 703
Layer L
Layer L-1
layer L
layer L-1
Reset
Leak
t=1
t=2
t=T-1
t=T

FIG. 7

800
1.0
0.8
0.6
0.4
0.2
0.0
-0.50
-0.25
0.00
0.25
0.50
0.75
1.00
1.25
1.50

FIG. 8

150
130
151
Eligible potential generation circuit
Pulse generator (Peri) 110
Eligible potential generation circuit
Eligible potential generation circuit
Synapse cells W
Eligible potential generation circuit
Neuron circuit (Peri) 153
900
130
pPTRACE
930
spk_th
+
−
950
R
C
V_on/off
Pulse generator (Peri) 110
910
#row

FIG. 9

1000
Pulse generator
110
Row#
Eligible
Potential
circuit
1010
Eligible
spike
flag (M)
1030
130
Flag
Flag
Flag
Flag
Pulse
generator
(Peri)
110
Synapse cells
W
Flag
Flag
Flag
Flag
Neuron circuit (Peri)
Loss-2-pulse circuit

FIG. 10

1100
1110
$V_{on/off}$
$V_{on/off}$
Eligible potential circuit 1010
#row
930
$spk_{th}$
Spike pulse
Eligible potential circuit 1010
Eligible spike Flag (M) 1030

FIG. 11

130
Pulse generator (Peri) 110
Eligible potential generation circuit
Eligible potential generation circuit
Eligible potential generation circuit
Eligible potential generation circuit
SNN 150
1200
151
Synapse cells W
Neuron circuit (Peri) 153
Loss-2-pulse circuit 155
Loss circuit module 1210
Spike counter circuit 1211
Normalization circuit 1213
Label vector 1215
BP signal 1217
Reset signal 1219

FIG. 12

1300
L[T-2]
L[T-1]
Softmax
Softmax
A^l[0]
A^l[1]
A^l[2]
A^l[T-2]
A^l[T-1]
Layer l
S^l[0]
S^l[1]
S^l[2]
S^l[T-2]
S^l[T-1]
Reset
Leak
U^l[0]
U^l[1]
U^l[2]
U^l[T-2]
U^l[T-1]
W^l
W^l
W^l
Layer l-1
S^l-1[0]
S^l-1[1]
S^l-1[2]
S^l-1[T-2]
S^l-1[T-1]
t=0
t=1
t=2
t=T-2
t=T-1

FIG. 13

1400
$L[T-2]$
$L[T-1]$
$L[S-1]$
Softmax
Softmax
Softmax
$A^l[0]$
$A^l[1]$
$A^l[2]$
$A^l[T-2]$
$A^l[T-1]$
$A[T]$
$A^l[S-1]$
Always-On
Always-On
Always-On
Layer l
$S^l[0]$
$S^l[1]$
$S^l[2]$
$S^l[T-2]$
$S^l[T-1]$
$S^l[T]$
$S^l[S-1]$
Reset
Leak
$U^l[0]$
$U^l[1]$
$U^l[2]$
$U^l[T-2]$
$U^l[T-1]$
$U^l[T]$
$U^l[S-1]$
$W^l$
$W^l$
$W^l$
$W^l$
Layer l-1
$S^{l-1}[0]$
$S^{l-1}[1]$
$S^{l-1}[2]$
$S^{l-1}[T-2]$
$S^{l-1}[T-1]$
$S^{l-1}[T]$
$S^{l-1}[S-1]$
t=0
t=1
t=2
t=T-2
t=T-1
t=T
t=S-1

FIG. 14

1500
1R CBA
Remained pulse
Switch
On
Off
Synapse cells
W1
Error 2 Pulse circuit
1501
1S(T)1R CBA
Vdd(1)
GND (0)
: Selected
: Half-selected
: Unselected
: w-pulse


FIG. 15

Start
1610
Calculate loss value through forward propagation for all time steps based on membrane potential and potential value accumulated on accumulative neuron by output spike signal generated in spiking neuron including pre-synaptic neuron and post-synaptic neuron
1620
Train SNN through backpropagation of loss value of last time step of forward propagation of loss value
End

FIG. 16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 9792547 B2


### Non-patent literature cited in the description


- On-Chip Error-triggered Learning of Multi-layer Memristive Spiking Neural Networks. **MELIKA PAYVAND et al.** ARXIV.ORG. CORNELL UNIVERSITY LIBRARY, 21 November 2020
- Biologically-inspired training of spiking recurrent neural networks with neuromorphic hardware. **BOHNSTINGL THOMAS et al.** 2022 IEEE 4TH INTERNATIONAL CONFERENCE ON ARTIFICIAL INTELLIGENCE CIRCUITS AND SYSTEMS (AICAS). IEEE, 13 June 2022, 218-221